# EUROPÄISCHE PATENTSCHRIFT

(11) **EP 3 784 737 B1**
(45) Veröffentlichungstag und Bekanntmachung des Hinweises auf die Patenterteilung: **02.03.2022**
(21) Anmeldenummer: 19719305.5
(22) Anmeldetag: 26.04.2019
(51) Int. Cl.: C09D 5/00

(54) **OBERFLÄCHENMODIFIZIERTE ALUMINIUMOXIDHYDROXID-PARTIKEL ALS RHEOLOGIEHILFSMITTEL IN WÄSSRIGEN BESCHICHTUNGSMITTELZUSAMMENSETZUNGEN**
SURFACE-MODIFIED ALUMINIUM OXIDHYDROXIDE PARTICLES AS A RHEOLOGY CONTROL AGENT IN AQUEOUS COATING COMPOSITIONS
PARTICULES D'HYDROXYDE D'OXYDE D'ALUMINIUM MODIFIÉS EN SURFACE EN TANT QU'ADJUVANT RHÉOLOGIQUE DANS DES COMPOSITIONS DE REVÊTEMENT AQUEUSES

(30) Priorität: 27.04.2018 EP 18169868
(43) Veröffentlichungstag der Anmeldung: 03.03.2021
(73) Patentinhaber: BASF Coatings GmbH, 48165 Münster (DE)
(72) Erfinder: POPPE, Andreas, 48165 Münster (DE); WEGENER, Martina, 48165 Münster (DE); REUTER, Laura, 48165 Münster (DE)
(74) Vertreter: BASF IP Association
(86) Internationale Anmeldenummer: PCT/EP2019/060698
(87) Internationale Veröffentlichungsnummer: WO 2019/207085

(56) Entgegenhaltungen:
- EP-A1- 0 563 653
- WO-A2-2016/014946
- US-A1- 2005 176 851
- US-A1- 2005 227 000
- US-A1- 2011 274 912

## Beschreibung

Die vorliegende Erfindung betrifft eine wässrige Beschichtungsmittelzusammensetzung, die einen pH-Wert ≥ 7,5 aufweist und wenigstens ein Polymer als Komponente (A) und zudem Aluminiumoxidhydroxid-Partikel als Komponente (B) umfasst, wobei die Komponente (B) in einer Menge von wenigstens 0,1 Gew.-%, bezogen auf den Festkörpergehalt der Beschichtungsmittelzusammensetzung, darin enthalten ist, und wobei die Oberfläche der als Komponente (B) eingesetzten Aluminiumoxidhydroxid-Partikel zumindest teilweise mit wenigstens einer organischen Säure modifiziert ist, sowie ein Verfahren zur Herstellung einer Mehrschichtlackierung unter Verwendung der wässrigen Beschichtungsmittelzusammensetzung und eine so hergestellte Mehrschichtlackierung.

### Stand der Technik

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Mehrschichtlackierungen werden dabei bevorzugt nach dem sogenannten "Basislack/Klarlack"-Verfahren aufgebracht, d.h. es wird wenigstens ein pigmentierter Basislack vorlackiert und nach kurzer Ablüftzeit ohne Einbrennschritt (Nass-in-Nass-Verfahren) mit einem Klarlack überlackiert. Anschließend werden Basislack und Klarlack zusammen eingebrannt. Besonders große Bedeutung hat das "Basislack/Klarlack"-Verfahren bei der Applikation von Automobil-Metalleffektlacken erlangt.

Aus wirtschaftlichen und ökologischen Gründen besteht ein Bedarf beim Auftragen solcher Mehrschichtlackierungen, insbesondere bei der Applikation der Basislackschicht, wässrige Beschichtungsmittelzusammensetzungen einzusetzen, um möglichst geringe VOC-Werte zu erreichen.

Insbesondere im Bereich der Automobilserienlackierung ist es erforderlich, dass die vorgenannten "Nass-in-Nass"-Verfahren es ermöglichen, möglichst hohe Schichtdicken von wässrigen Lacken in möglichst kurzer Zeit zu applizieren, damit die Lackieranlagen wirtschaftlich betrieben werden können. Dabei ist es auch technischer Sicht wünschenswert, wenn die eingesetzten wässrigen Lacke, insbesondere Basislacke, einen möglichst hohen Festkörpergehalt und eine gut ausgeprägte Strukturviskosität aufweisen, d.h. ein gutes Thixotropierverhalten zeigen, um ein optimales Trocknungsverhalten und eine hervorragende Ausrichtung von gegebenenfalls darin enthaltenen Effektpigmenten zu erreichen. Um dies zu erzielen, werden üblicherweise geeignete Thixotropiermittel in die Lacke eingearbeitet.

Zudem sollten Beschichtungsmittelzusammensetzungen, die zur Herstellung von Basislackschichten nach dem vorstehend genannten "Nass-in-Nass"-Verfahren eingesetzt werden, nach einer möglichst kurzen Vortrocknungszeit ohne Einbrennschritt mit einer Klarlackschicht überlackiert werden können, ohne dass dabei Störungen im visuellen Erscheinungsbild (Appearance) wie zum Beispiel sogenannte Nadelstiche, Kocher, Läufer und/oder (andere) Verlaufsstörungen auftreten, um ein möglichst optimales optisches Erscheinungsbild der resultierenden Beschichtungen zu erhalten. Auch um solche Störungen zumindest zu minimieren, werden üblicherweise geeignete Rheologiehilfsmittel in die aufzutragenden Beschichtungsmittelzusammensetzungen inkorporiert.

Im Stand der Technik ist es im Bereich der Automobilserienlackierung bekannt, beispielsweise aus EP 0 281 936 A1, Schichtsilikate, insbesondere Smektite wie das kommerziell erhältliche Produkt Laponite^{®} RD als Rheologiehilfsmittel in wässrige Beschichtungsmittel-zusammensetzungen einzuarbeiten, um ein solches vorstehend näher erläutertes erwünschtes Eigenschaftsprofil zu erzielen. Diese eingesetzten Smektite weisen üblicherweise einen mittleren Partikeldurchmesser im Bereich von 25 nm und eine Plättchendicke im Bereich von wenigen Nanometern auf. Zwar führt der Einsatz solcher Smektite oftmals zu einer ausgeprägten Strukturviskosität und damit zu einer ausgeprägten Thixotropie mit vergleichsweise kurzen Antwortzeiten, was insbesondere hinsichtlich der Ausrichtung von Effektpigmenten vorteilhaft sein kann. Jedoch bilden sich aufgrund der vergleichsweise kleinen Partikelgröße dieser Schichtsilikate üblicherweise vergleichsweise enge "Kartenhausstrukturen", was in der Koaleszenzphase bei der Lackapplikation oftmals Schwierigkeiten bereitet, Wasser oder Kondensationsprodukte aus den Nassfilmen entweichen zu lassen. Ferner sind aufgrund der vergleichsweise kleinen Partikelgröße solcher Schichtsilikate oftmals starke Stabilisierungskräfte notwendig, um die Partikel ausreichend zu stabilisieren. Diese starken notwendigen Stabilisierungskräfte erlauben jedoch das Einstellen und die Nutzung von nur vergleichsweise geringen Festkörpergehalten, was unerwünscht ist. Zudem ergeben sich dadurch oftmals Einschränkungen hinsichtlich des Elektrolytgehalts der Wasserlacke und damit hinsichtlich der Stabilität der Wasserlacke. Da keine alternativen synthetischen Schichtsilikat- und insbesondere Smektit-Produkte mit deutlich größeren Partikelgrößen am Markt verfügbar sind, sind die Formulierungsmöglichkeiten mit den bekannten Laponite^{®} RD Systemen begrenzt, insbesondere wenn wässrige Lacke mit hohem Festkörpergehalt eingesetzt werden sollen.

Es besteht daher ein Bedarf an wässrigen Beschichtungsmittelzusammensetzungen, die die vorgenannten Nachteile nicht aufweisen.

### Aufgabe

Eine Aufgabe der vorliegenden Erfindung ist es daher, eine wässrige Beschichtungsmittelzusammensetzung wie eine wässrige Basislackzusammensetzung zur Verfügung zu stellen, welche mit vergleichsweise hohem und insbesondere höherem Festkörpergehalt als aus dem Stand der Technik bekannte Beschichtungsmittelzusammensetzungen formuliert werden kann, die sich dabei aber gleichzeitig durch mindestens genauso gute und vorzugsweise sogar durch verbesserte Applikationseigenschaften auszeichnet als aus dem Stand der Technik bekannte Beschichtungsmittelzusammensetzungen, insbesondere im Hinblick auf das optisches Erscheinungsbild der daraus resultierenden Beschichtungen, d.h. hinsichtlich derer Appearance, insbesondere im Hinblick auf das Auftreten von Nadelstichen, Kochern und Läufern, und die ebenso keine Nachteile, sondern im Gegenteil vorzugsweise sogar Vorteile hinsichtlich ihrer Strukturviskosität und ihres Thixotropierverhaltens zeigt.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher eine wässrige Beschichtungsmittelzusammensetzung umfassend wenigstens
(A) wenigstens ein als Bindemittel einsetzbares Polymer als Komponente (A) und
(B) Aluminiumoxidhydroxid-Partikel als Komponente (B),
wobei die wässrige Beschichtungsmittelzusammensetzung einen pH-Wert ≥7,5 aufweist,
dadurch gekennzeichnet, dass die Beschichtungsmittelzusammensetzung die Komponente (B) in einer Menge von wenigstens 0,1 Gew.-% enthält, bezogen auf den Festkörpergehalt der Beschichtungsmittelzusammensetzung, und die Oberfläche der als Komponente (B) eingesetzten Aluminiumoxidhydroxid-Partikel zumindest teilweise mit wenigstens einer organischen Säure modifiziert ist.

Diese wässrige Beschichtungsmittelzusammensetzung wird nachfolgend auch als "erfindungsgemäße Beschichtungsmittelzusammensetzung" bezeichnet. Vorzugsweise liegt der Festkörpergehalt der erfindungsgemäßen Beschichtungsmittelzusammensetzung dabei bei >25 Gew.-%, bezogen auf das Gesamtgewicht der Beschichtungsmittelzusammensetzung. Vorzugsweise ist die erfindungsgemäße Beschichtungsmittelzusammensetzung ein Basislack.

Ein weiterer Gegenstand der vorliegenden Erfindung ist ein Verfahren zur Herstellung einer Mehrschichtlackierung, bei dem
(1a) ein wässriger Basislack auf ein gegebenenfalls beschichtetes Substrat aufgebracht wird,
(2a) aus dem in Stufe (1a) aufgebrachten Lack ein Polymerfilm gebildet wird,
(1b) gegebenenfalls auf den so gebildeten Polymerfilm ein weiterer wässriger Basislack aufgebracht wird,
(2b) gegebenenfalls aus dem in Stufe (1b) aufgebrachten Lack ein Polymerfilm gebildet wird,
(3) auf die so erhaltene(n) Basislackschicht(en) ein Klarlack aufgebracht wird und anschließend
(4) die Basislackschicht(en) zusammen mit der Klarlackschicht gemeinsam gehärtet wird bzw. werden,
welches dadurch gekennzeichnet ist, dass die erfindungsgemäße wässrige Beschichtungsmittelzusammensetzung in Stufe (1a) als Basislack oder - sofern das Verfahren zudem die Stufen (1b) und (2b) umfasst - in Stufe (1a) und/oder (1b) als Basislack eingesetzt wird.

Dieses Verfahren wird nachfolgend auch als "erfindungsgemäßes Verfahren" bezeichnet.

Es wurde überraschend gefunden, dass die erfindungsgemäße wässrige Beschichtungsmittelzusammensetzung durch die Einarbeitung der speziellen Aluminiumoxidhydroxid-Partikel als Komponente (B) mit einem vergleichsweise hohen Festkörpergehalt formuliert werden kann, insbesondere mit einem Festkörpergehalt von >25 Gew.-%. Insbesondere kann so ein höherer Festkörpergehalt erzielt werden als mit aus dem Stand der Technik bekannten Beschichtungsmittelzusammensetzungen und zwar insbesondere als mit solchen, die ein Schichtsilikat wie Laponite^{®} RD als Rheologiehilfsmittel enthalten. Es wurde zudem überraschend gefunden, dass sich die erfindungsgemäße wässrige Beschichtungsmittelzusammensetzung dabei aber gleichzeitig - trotz des vergleichsweise hohen Festkörpergehalts - durch mindestens genauso gute und teilweise sogar durch verbesserte Applikationseigenschaften auszeichnet als aus dem Stand der Technik bekannte Beschichtungsmittelzusammensetzungen wie insbesondere Beschichtungsmittelzusammensetzungen, die ein Schichtsilikat wie Laponite^{®} RD als Rheologiehilfsmittel enthalten. Dies gilt insbesondere auch im Hinblick auf einen Vergleich des optischen Erscheinungsbilds der jeweils daraus resultierenden Beschichtungen, d.h. hinsichtlich ihrer Appearance, insbesondere bei einer Applikation gemäß dem erfindungsgemäßen Verfahren, und insbesondere im Hinblick auf das Auftreten von Nadelstichen, Kochern und Läufern. Ferner gilt dies zudem hinsichtlich der Strukturviskosität und des Thixotropierverhaltens der jeweiligen Beschichtungsmittelzusammensetzungen.

Es wurde überraschend gefunden, dass bei Einarbeitung der speziellen Aluminiumoxidhydroxid-Partikel als Komponente (B) zur Herstellung der erfindungsgemäßen wässrigen Beschichtungsmittelzusammensetzung vorteilhafterweise keine starken Stabilisierungskräfte notwendig sind, um die Partikel ausreichend zu stabilisieren, wodurch die Formulierung von vergleichsweise hohen Festkörpergehalten möglich wird. Überraschenderweise wird nämlich die mittlere Partikelgröße der eingesetzten speziellen Aluminiumoxidhydroxid-Partikel bei Einsatz zur Herstellung der erfindungsgemäßen wässrigen Beschichtungsmittelzusammensetzung deutlich heraufgesetzt, wodurch die als Komponente (B) eingesetzten Aluminiumoxidhydroxid-Partikel eine signifikant höhere mittlere Partikelgröße aufweisen als beispielsweise aus dem Stand der Technik bekannte Schichtsilikate wie Laponite^{®} RD, wenn diese in wässrige Beschichtungsmittelzusammensetzungen eingearbeitet werden.

### Ausführliche Beschreibung

Der Begriff "umfassend" im Sinne der vorliegenden Erfindung im Zusammenhang mit der erfindungsgemäßen Beschichtungsmittelzusammensetzung hat vorzugsweise die Bedeutung "bestehend aus". Dabei können hinsichtlich der erfindungsgemäßen Beschichtungsmittelzusammensetzung neben den Komponenten (A), (B) und Wasser eine oder mehrere der weiteren nachstehend genannten optional in der erfindungsgemäßen Beschichtungsmittelzusammensetzung enthaltenen Komponenten in dieser enthalten sein. Alle Komponenten können dabei jeweils in ihren nachstehend genannten bevorzugten Ausführungsformen vorliegen.

Die Anteile in Gew.-% aller in der erfindungsgemäßen Beschichtungsmittelzusammensetzung enthaltenen Komponenten (A), (B) und Wasser sowie weiterer gegebenenfalls zusätzlich vorhandener Komponenten addieren sich auf 100 Gew.%, bezogen auf das Gesamtgewicht der Beschichtungsmittelzusammensetzung.

Die Begriffe "Kocher", "Läufer", "Nadelstiche", "Stippen", "Rheologiehilfsmittel" ("Rheologisches Additiv") sowie "Verlaufsstörungen" bzw. "Verlauf" sind dem Fachmann bekannt und beispielsweise definiert im Römpp Lexikon, Lacke und Druckfarben, Georg Thieme Verlag 1998.

### Beschichtungsmittelzusammensetzung

Die erfindungsgemäße wässrige Beschichtungsmittelzusammensetzung weist einen pH-Wert ≥7,5 auf, vorzugsweise einen pH-Wert in einem Bereich von ≥7,5 bis 13,0. Besonders bevorzugt liegt der pH-Wert in einem Bereich von ≥7,5 bis 12,5, ganz besonders bevorzugt in einem Bereich von 7,6 bis 12,0, noch bevorzugter in einem Bereich von 7,7 bis 11,5 oder bis 11,0. Am meisten bevorzugt ist ein pH-Wert in einem Bereich von 7,8 bis 10,5 oder bis 10,0, insbesondere von 8,0 bis 9,5.

Vorzugsweise ist die erfindungsgemäße wässrige Beschichtungsmittelzusammensetzung zur Herstellung einer Basislackschicht geeignet. Besonders bevorzugt ist das erfindungsgemäße Beschichtungsmittel daher ein wässriger Basislack. Der Begriff des Basislacks ist dem Fachmann bekannt und beispielsweise definiert im Römpp Lexikon, Lacke und Druckfarben, Georg Thieme Verlag, 1998, 10. Auflage, Seite 57. Unter einem Basislack ist demzufolge insbesondere ein in der Automobillackierung und allgemeinen Industrielackierung eingesetzter farbgebender und/oder farbgebender und einen optischen Effekt gebendes Zwischenbeschichtungsmittel zu verstehen. Dieser wird im Allgemeinen auf einem mit Füller oder Grundierfüller vorbehandelten Metall- oder Kunststoffuntergrund, mitunter im Fall von Kunststoffsubstraten auch direkt auf dem Kunststoffuntergrund und im Fall von Metallsubstraten auch auf eine Elektrotauchlackschicht, mit der das Metallsubstrat beschichtet ist, aufgebracht Auch Altlackierungen, welche gegebenenfalls noch vorbehandelt werden müssen (beispielsweise durch Anschleifen), können als Untergründe dienen. Mittlerweile ist es zudem durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Die erfindungsgemäße Beschichtungsmittelzusammensetzung ist wässrig. Es handelt sich dabei vorzugsweise um ein System, das als Lösemittel hauptsächlich Wasser, vorzugsweise in einer Menge von wenigstens 20 Gew.-%, und organische Lösemittel in geringeren Anteilen, vorzugsweise in einer Menge von <20 Gew.-%, enthält, jeweils bezogen auf das Gesamtgewicht der erfindungsgemäßen Beschichtungsmittelzusammensetzung.

Vorzugsweise enthält die erfindungsgemäße Beschichtungsmittelzusammensetzung einen Anteil an Wasser von mindestens 20 Gew.-%, besonders bevorzugt von mindestens 25 Gew.-%, ganz besonders bevorzugt von mindestens 30 Gew.-%, insbesondere von mindestens 35 Gew.-%, jeweils bezogen auf das Gesamtgewicht der erfindungsgemäßen Beschichtungsmittelzusammensetzung.

Vorzugsweise enthält die erfindungsgemäße Beschichtungsmittelzusammensetzung einen Anteil an Wasser, der in einem Bereich von 20 bis 65 Gew.-%, besonders bevorzugt in einem Bereich von 25 bis 60 Gew.-%, ganz besonders bevorzugt in einem Bereich von 30 bis 55 Gew.-% liegt, jeweils bezogen auf das Gesamtgewicht der erfindungsgemäßen Beschichtungsmittelzusammensetzung.

Vorzugsweise enthält die erfindungsgemäße Beschichtungsmittelzusammensetzung einen Anteil an organischen Lösemitteln, der in einem Bereich von <20 Gew.-%, besonders bevorzugt in einem Bereich von 0 bis <20 Gew.-%, ganz besonders bevorzugt in einem Bereich von 0,5 bis <20 Gew.-% oder bis 15 Gew.-% liegt, jeweils bezogen auf das Gesamtgewicht der erfindungsgemäßen Beschichtungsmittelzusammensetzung.

Alle üblichen dem Fachmann bekannten organischen Lösemittel können als organisches Lösemittel zur Herstellung der erfindungsgemäßen Beschichtungsmittelzusammensetzung eingesetzt werden. Der Begriff des "organischen Lösemittels" ist dem Fachmann bekannt, insbesondere aus der Richtlinie 1999/13/EG des Rates vom 11. März 1999 (darin als Lösungsmittel bezeichnet). Vorzugsweise ist das oder sind die organischen Lösemittel ausgewählt aus der Gruppe bestehend aus ein- oder mehrwertigen Alkoholen, beispielsweise Methanol, Ethanol, 1-Propanol, 2-Propanol, 1-Butanol, Ethylenglykol, Ethylglykol, Propylglykol, Butylglykol, Butyldiglykol, 1,2-Propandiol und/oder 1,3-Propandiol, Ethern, beispielsweise Diethylenglykoldimethylether, aliphatische Kohlenwasserstoffen, aromatische Kohlenwasserstoffen, beispielsweise Toluol und/oder Xylole, Ketonen, beispielsweise Aceton, N-Methylpyrrolidon, N-Ethylpyrrolidon, Methylisobutylketon, Isophoron, Cyclohexanon, Methylethylketon, Estern, beispielsweise Methoxypropylacetat, Ethylacetat und/oder Butylacetat, Amiden, beispielsweise Dimethylformamid und Mischungen davon.

Vorzugsweise liegt der Festkörpergehalt der erfindungsgemäßen Beschichtungsmittelzusammensetzung bei >25 Gew.-% jeweils bezogen auf das Gesamtgewicht der Beschichtungsmittelzusammensetzung. Die Bestimmung des Festkörpergehalts, also des nicht-flüchtigen Anteils, erfolgt gemäß der nachstehend beschriebenen Methode. Vorzugsweise liegt der Festkörpergehalt der erfindungsgemäßen Beschichtungsmittelzusammensetzung in einem Bereich von >25 bis 50 Gew.-%, besonders bevorzugt von >25 bis 45 Gew.-%, ganz besonders bevorzugt von >25 bis 40 Gew.-%, insbesondere von >25 bis 37,5 Gew. %, am meisten bevorzugt von >25 bis 35 Gew.-%, jeweils bezogen auf das Gesamtgewicht der erfindungsgemäßen Beschichtungsmittelzusammensetzung. Der Ausdruck ">25 Gew.-%" umfasst dabei jeweils insbesondere die punktuellen Zahlenwerte von 26, 27, 28, 29, 30, 31, 32, 33 und 34 Gew.-% als Untergrenze.

Vorzugsweise liegt die prozentuale Summe aus dem Festkörper der erfindungsgemäßen Beschichtungsmittelzusammensetzung und dem Anteil von Wasser an der erfindungsgemäßen Beschichtungsmittelzusammensetzung bei mindestens 40 Gew.-%, bevorzugt bei mindestens 50 Gew.-%. Darunter bevorzugt sind Bereiche von 40 bis 95 Gew.-%, insbesondere 45 oder 50 bis 90 Gew.-%. Hat also beispielsweise eine erfindungsgemäße Beschichtungsmittelzusammensetzung einen Festkörpergehalt von 30 Gew.-% und einen Wassergehalt von 25 Gew.-%, so beträgt die oben definierte prozentuale Summe aus dem Festkörper und dem Anteil von Wasser 55 Gew.-%.

Vorzugsweise enthält die erfindungsgemäße Beschichtungsmittelzusammensetzung einen Anteil an dem wenigstens einen als Bindemittel eingesetzten Polymer (A) in einem Bereich von 1,0 bis 25 Gew.-%, besonders bevorzugt von 1,5 bis 20 Gew.-%, ganz besonders bevorzugt von 2,0 bis 18,0 Gew.-%, insbesondere von 2,5 bis 17,5 Gew.-%, am meisten bevorzugt von 3,0 bis 15,0 Gew.-%, jeweils bezogen auf das Gesamtgewicht der erfindungsgemäßen Beschichtungsmittelzusammensetzung. Die Bestimmung beziehungsweise Festlegung des Anteils des Polymers (A) an der erfindungsgemäßen Beschichtungsmittelzusammensetzung kann über die Bestimmung des Festkörpergehalts (auch genannt nicht flüchtiger Anteil, Festkörpergehalt oder Festkörperanteil) einer wässrigen Dispersion enthaltend das Polymer (A) erfolgen, die dann zur Herstellung der Beschichtungsmittelzusammensetzung eingesetzt wird.

Die erfindungsgemäße wässrige Beschichtungsmittelzusammensetzung enthält die als Komponente (B) eingesetzten Aluminiumoxidhydroxid-Partikel in einer Menge von wenigstens 0,1 Gew.-%, vorzugsweise von wenigstens 0,5 Gew.-%, besonders bevorzugt von wenigstens 0,75 Gew.-%, ganz besonders bevorzugt von wenigstens 1,0 oder von wenigstens 1,5 Gew.-%, jeweils bezogen auf den Festkörpergehalt der Beschichtungsmittelzusammensetzung. Vorzugsweise sind die als Komponente (B) eingesetzten Aluminiumoxidhydroxid-Partikel in der Beschichtungsmittelzusammensetzung in einer Menge in einem Bereich von 0,1 Gew.-% bis 20 Gew.-%, besonders bevorzugt von 0,5 Gew.-% bis 15 Gew.-%, ganz besonders bevorzugt von 1,0 bis 12,5 Gew.-%, insbesondere von 1,5 Gew.-% bis 10 Gew.-%, jeweils bezogen auf den Festkörpergehalt der Beschichtungsmittelzusammensetzung, enthalten.

Vorzugsweise enthält die erfindungsgemäße wässrige Beschichtungsmittelzusammensetzung die als Komponente (B) eingesetzten Aluminiumoxidhydroxid-Partikel in einer Menge von wenigstens 0,05 Gew.-%, besonders bevorzugt von wenigstens 0,25 Gew.-%, ganz besonders bevorzugt von wenigstens 0,50 Gew.-% oder von wenigstens 0,75 Gew.-%, noch bevorzugter von wenigstens 1,0 Gew.-%, insbesondere von wenigstens 1,5 Gew.-% jeweils bezogen auf das Gesamtgewicht der Beschichtungsmittelzusammensetzung.

Vorzugsweise ist der Anteil in Gew.-%, bezogen auf das Gesamtgewicht der Beschichtungsmittelzusammensetzung, an Komponente (A) in der erfindungsgemäßen Beschichtungsmittelzusammensetzung höher als der Anteil an Komponente (B).

Vorzugsweise liegt das relative Gewichtsverhältnis von Komponente (B) zu Komponente (A) in der erfindungsgemäßen Beschichtungsmittelzusammensetzung in einem Bereich von 1:1 bis 1:20 oder von 1:1 bis 1:15 oder von 1:1,1 bis 1:20 oder von 1:1,1 bis 1:15 oder von 1:1,1 bis 1:10, besonders bevorzugt in einem Bereich von 1:1,2 bis 1:8, ganz besonders bevorzugt in einem Bereich von 1:1,3 bis 1:7,5, noch bevorzugter in einem Bereich von 1:1,4 bis 1:7, insbesondere in einem Bereich von 1:1,5 bis 1:6,5, noch bevorzugter in einem Bereich von 1:1,6 bis 1:6, am meisten bevorzugt in einem Bereich von 1:2 bis 1:5.

Vorzugsweise enthält die erfindungsgemäße Beschichtungsmittelzusammensetzung kein Melaminharz in einer Menge >5 Gew.-%, bezogen auf den Festkörpergehalt der Beschichtungsmittelzusammensetzung. Besonders bevorzugt enthält die erfindungsgemäße Beschichtungsmittelzusammensetzung gar kein Melaminharz.

Vorzugsweise enthält die erfindungsgemäße Beschichtungsmittelzusammensetzung keinen Polyester mit einer Säure-Zahl <5 mg KOH/g Polyester in einer Menge >5 Gew.-%, bezogen auf den Festkörpergehalt der Beschichtungsmittelzusammensetzung. Besonders bevorzugt enthält die erfindungsgemäße Beschichtungsmittelzusammensetzung gar keinen Polyester mit einer Säure-Zahl <5 mg KOH/g Polyester.

### Komponente (A)

Die erfindungsgemäße wässrige Beschichtungsmittelzusammensetzung enthält wenigstens ein Polymer als Komponente (A). Dieses Polymer wird als Bindemittel eingesetzt. Unter dem Begriff "Bindemittel" werden im Sinne der vorliegenden Erfindung in Einklang mit der DIN EN ISO 4618 (deutsche Fassung, Datum: März 2007) die für die Filmbildung verantwortlichen nicht-flüchtigen Anteile einer Beschichtungsmittelzusammensetzung, verstanden. Darin enthaltene Pigmente und/oder Füllstoffe werden somit nicht unter den Begriff des Bindemittels subsumiert. Bevorzugt handelt es sich bei dem wenigstens einen Polymer (A) um das Hauptbindemittel der Beschichtungsmittelzusammensetzung. Als Hauptbindemittel wird im Rahmen der vorliegenden Erfindung ein Bindemittelbestandteil vorzugsweise dann bezeichnet, wenn es keinen anderen Bindemittelbestandteil in der Beschichtungsmittelzusammensetzung wie einem Basislack gibt, welches in einem höheren Anteil, bezogen auf das Gesamtgewicht der jeweiligen Beschichtungsmittelzusammensetzung, vorhanden ist.

Der Begriff "Polymer" ist dem Fachmann bekannt und umfasst im Sinne der vorliegenden Erfindung sowohl Polyaddukte als auch Polymerisate als auch Polykondensate. Unter dem Begriff "Polymer" sind sowohl Homopolymere als auch Copolymere zu subsumieren.

Das als Komponente (A) eingesetzte wenigstens eine Polymer kann selbstvernetzend oder nicht-selbstvernetzend sein. Geeignete als Komponente (A) einsetzbare Polymere sind beispielsweise aus EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 und WO 2005/021168 A1 bekannt.

Vorzugsweise ist das wenigstens eine als Komponente (A) eingesetzte Polymer ausgewählt aus der Gruppe bestehend aus Polyurethanen, Polyharnstoffen, Polyestern, Polyamiden, Polyethern, Poly(meth)acrylaten und/oder Mischpolymerisaten der genannten Polymere, insbesondere Polyurethan-Poly(meth)acrylaten und/oder Polyurethan-Polyharnstoffen. Besonders bevorzugt ist das wenigstens eine als Komponente (A) eingesetzte Polymer ausgewählt aus der Gruppe bestehend aus Polyurethanen, Polyestern, Poly(meth)acrylaten und/oder Mischpolymerisaten der genannten Polymere. Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Bevorzugte Polyurethane werden beispielsweise beschrieben in der deutschen Patentanmeldung DE 199 48 004 A1, Seite 4, Zeile 19 bis Seite 11, Zeile 29 (Polyurethanpräpolymer B1), in der europäischen Patentanmeldung EP 0 228 003 A1, Seite 3, Zeile 24 bis Seite 5, Zeile 40, in der europäischen Patentanmeldung EP 0 634 431 A1, Seite 3, Zeile 38 bis Seite 8, Zeile 9, und der internationalen Patentanmeldung WO 92/15405, Seite 2, Zeile 35 bis Seite 10, Zeile 32.

Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder WO 2014/033135 A2, Seite 2, Zeile 24 bis Seite 7, Zeile 10 sowie Seite 28, Zeile 13 bis Seite 29, Zeile 13 beschrieben. Ebenfalls bevorzugte Polyester sind Polyester mit dendritischer Struktur wie sie zum Beispiel in der WO 2008/148555 A1 beschrieben werden. Diese können nicht nur in Klarlacken, sondern auch in insbesondere wässrigen Basislacken eingesetzt werden.

Bevorzugte Polyurethan-Poly(meth)acrylat-Mischpolymerisate ((meth)acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben.

Bevorzugte Poly(meth)acrylate solche, welche durch mehrstufige radikalische Emulsionspolymerisation von olefinisch ungesättigten Monomeren in Wasser und/oder organischen Lösemitteln hergestellt werden können. Besonders bevorzugt sind beispielsweise Saat-Kern-Schale-Polymerisate (SCS-Polymerisate). Solche Polymerisate bzw. wässrige Dispersionen enthaltend solche Polymerisate sind beispielsweise aus WO 2016/116299 A1 bekannt. Besonders bevorzugte Saat-Kern-Schale-Polymerisate sind Polymerisate, vorzugsweise solche mit einer mittleren Teilchengröße von 100 bis 500 nm, die herstellbar sind durch aufeinanderfolgende radikalische Emulsionspolymerisation von drei vorzugsweise voneinander verschiedene Monomerenmischungen (A), (B) und (C) von olefinisch ungesättigten Monomeren in Wasser, wobei die Mischung (A) mindestens 50 Gew.-% von Monomeren mit einer Löslichkeit in Wasser von kleiner 0,5 g/l bei 25°C enthält und ein Polymer, welches aus der Mischung (A) hergestellt wird, eine Glasübergangstemperatur von 10 bis 65°C besitzt, die Mischung (B) mindestens ein mehrfach ungesättigtes Monomer enthält und ein Polymer, welches aus der Mischung (B) hergestellt wird, eine Glasübergangstemperatur von -35 bis 15°C besitzt, und ein Polymer, welches aus der Mischung (C) hergestellt wird, eine Glasübergangstemperatur von -50 bis 15°C besitzt, und wobei i. zunächst die Mischung (A) polymerisiert wird, ii. dann die Mischung (B) in Gegenwart des unter i. hergestellten Polymerisats polymerisiert wird, und iii. danach die Mischung (C) in Gegenwart des unter ii. hergestellten Polymerisats polymerisiert wird.

Bevorzugte Polyurethan-Polyharnstoffe-Mischpolymerisate sind Polyurethan-Polyharnstoff-Partikel, vorzugsweise solche mit einer mittleren Teilchengröße von 40 bis 2000 nm, wobei die Polyurethan-Polyharnstoff-Partikel, jeweils in umgesetzter Form, mindestens ein Isocyanatgruppen-haltiges Polyurethan-Präpolymer enthaltend anionische und/oder in anionische Gruppen überführbare Gruppen sowie mindestens ein Polyamin enthaltend zwei primäre Aminogruppen und ein oder zwei sekundäre Aminogruppen enthalten. Vorzugsweise werden derartige Mischpolymerisate in Form einer wässrigen Dispersion eingesetzt. Solche Polymere sind grundsätzlich durch an sich bekannte Polyaddition von beispielsweise Polyisocyanaten mit Polyolen sowie Polyaminen herstellbar.

Vorzugsweise weist das als Komponente (A) eingesetzte Polymer reaktive funktionelle Gruppen auf, die eine Vernetzungsreaktion ermöglichen. Jede übliche dem Fachmann bekannte vernetzbare reaktive funktionelle Gruppe kommt dabei in Betracht. Vorzugsweise weist das als Komponente (A) eingesetzte Polymer wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen und Carbamat-Gruppen auf. Vorzugsweise weist das als Komponente (A) eingesetzte Polymer funktionelle Hydroxyl-Gruppen auf.

Vorzugsweise ist das als Komponente (A) eingesetzte Polymer hydroxyfunktionell und besitzt insbesondere bevorzugt eine OH-Zahl im Bereich von 15 bis 200 mg KOH/g, besonders bevorzugt von 20 bis 150 mg KOH/g.

Besonders bevorzugt ist das als Komponente (A) eingesetzte Polymer ein hydroxyfunktionelles Polyurethan-Poly(meth)acrylat-Mischpolymerisat, ein hydroxyfunktioneller Polyester und/oder ein hydroxyfunktionelles Polyurethan-Polyharnstoff-Mischpolymerisat.

Zudem kann die erfindungsgemäße wässrige Beschichtungsmittelzusammensetzung wenigstens ein an sich bekanntes typisches Vernetzungsmittel enthalten. Vernetzungsmittel sind unter die für die Filmbildung verantwortlichen nicht-flüchtigen Anteile einer Beschichtungsmittelzusammensetzung zu subsumieren und fallen daher unter die allgemeine Definition des Bindemittels. Vernetzungsmittel sind somit unter die Komponente (A) zu subsumieren.

Sofern ein Vernetzungsmittel vorhanden ist, handelt es sich bevorzugt um mindestens ein Aminoplastharz und/oder mindestens ein blockiertes oder freies Polyisocyanat, bevorzugt ein Aminoplastharz. Unter den Aminoplastharzen sind insbesondere Melaminharze wie Melamin-Formaldehydharze bevorzugt.

### Komponente (B)

Die erfindungsgemäße wässrige Beschichtungsmittelzusammensetzung umfasst Aluminiumoxidhydroxid-Partikel als Komponente (B), deren Oberfläche zumindest teilweise mit wenigstens einer organischen Säure modifiziert ist.

Der Begriff "Aluminiumoxidhydroxid" ist dem Fachmann bekannt. Darunter sind Verbindungen mit der chemischen Formel AIO(OH) bzw. γ-AIO(OH) zu subsumieren. Beispiele für Aluminiumoxidhydroxide sind insbesondere Böhmit und Pseudoböhmit. Vorzugsweise werden Böhmit-Partikel als Komponente (B) eingesetzt.

Die Oberfläche der als Komponente (B) eingesetzten Aluminiumoxidhydroxid-Partikel ist zumindest teilweise mit wenigstens einer organischen Säure modifiziert. Im Sinne der vorliegenden Erfindung wird unter dem Begriff der "Modifizierung" vorzugsweise eine Behandlung der Komponente (B) wie der Böhmit-Partikel mit wenigstens einer organischen Säure verstanden. Somit erfolgt die zumindest teilweise Modifizierung vorzugsweise durch eine Behandlung der Aluminiumoxidhydroxid-Partikel mit wenigstens einer organischen Säure, vorzugsweise unter Ausbildung ionischer und/oder kovalenter Gruppen. Wird diese so modifizierte Komponente (B) wie Böhmit-Partikel in ein wässriges Anwendungsmedium inkorporiert wie in die erfindungsgemäße wässrige Beschichtungsmittelzusammensetzung, welche einen pH-Wert ≥7,5 aufweist, so kann aufgrund der erfolgten Oberflächenbehandlung mit wenigstens einer organischen Säure eine "Umladung" in diesem pH-Bereich erfolgen und die modifizierten Böhmit-Partikel weisen eine zumindest teilweise anionisch geladene Oberfläche auf und lassen sich deshalb in das wässrige Medium einarbeiten und sind zu diesem kompatibel.

Aluminiumoxidhydroxid-Partikel, deren Oberfläche zumindest teilweise mit wenigstens einer organischen Säure modifiziert ist, sind im Stand der Technik bekannt: So beschreibt US 6,224,846 B1 Böhmit-Partikel, die mittels organischen Sulfonsäuren modifiziert werden, um eine Dispergierung entsprechender Böhmit-Partikel in Wasser und polaren organischen Lösemitteln zu ermöglichen. US 7,244,498 B2 offenbart Nanopartikel wie Böhmit-Nanopartikel, die mittels organischer Säuren einer Oberflächenmodifizierung unterworfen werden, wodurch eine negative Oberflächenladung erzeugt wird. Schließlich sind entsprechende zumindest teilweise mit wenigstens einer organischen Säure modifizierte Böhmit-Produkte kommerziell erhältlich und werden zum Beispiel unter den Bezeichnungen "Disperal^{®} HP 14/7", "Disperal^{®} HP 10/7" und "Disperal^{®} HP 18/7" von der Firma Sasol vertrieben.

Es sei der Vollständigkeit darauf hingewiesen, dass weitere Modifizierungen der Oberfläche von Böhmit-Partikeln im Stand der Technik ebenfalls bekannt sind. So werden von M. L. Nobel et al., Progress in Organic Coatings 2007, 58, Seiten 96-104, Acryl-Polymer-Nanokomposit-Materialien beschrieben, die Böhmit enthalten, wobei die Oberfläche der Böhmit-Partikeln mit Titanalkoholaten modifiziert werden kann. Eine solche Oberflächenmodifizierung führt jedoch nicht zu einer anionischen Stabilisierung der AI-Oberfläche des Böhmits.

Entsprechende nicht-modifizierte Böhmit-Partikel weisen dagegen in einem wässrigen Medium mit einem pH-Wert ≥7,5 eine kationische Oberfläche auf und sind unter diesen Bedingungen nicht einsetzbar. Der Einsatz solcher nicht-modifizierter Böhmit-Partikel erfolgt daher üblicherweise ausschließlich in einem sauren Anwendungsmedium. Beispielsweise wird ein entsprechender Einsatz solcher nicht-modifizierter Böhmit-Partikel in der WO 2004/031090 A2 und in der WO 2006/060510 A2 sowie in der US 2008/0090012 A1 offenbart. Nicht-modifizierte Böhmit-Partikel und deren Einsatz als Füllstoffe in Polymer-Komposit-Materialien sind zudem aus der WO 03/089508 A1 bekannt. Nicht-modifizierte Böhmit-Partikel sind daher bei einem pH-Wert ≥7,5 nicht einsetzbar.

Wie vorstehend erwähnt ist die Oberfläche der als Komponente (B) eingesetzten Aluminiumoxidhydroxid-Partikel zumindest teilweise mit wenigstens einer vorzugsweise aliphatischen organischen Säure modifiziert. Vorzugsweise weist die organische Säure wenigstens zwei, besonders bevorzugt wenigstens drei Säure-Gruppen auf. Als Säure-Gruppen kommen insbesondere Carbonsäure-Gruppen in Betracht und/oder Säure-Gruppen, die wenigstens ein S- oder wenigstens ein P-Atom enthalten. Beispiele für S-Atom-haltige Säure-Gruppen sind SulfonsäureGruppen und Sulfinsäure-Gruppen. Beispiele für P-Atom-haltige Säure-Gruppen sind Phosphorsäure- und Phosphonsäure-Gruppen sowie ihre partiellen oder vollständigen Ester wie Mono- und Diester. Bevorzugt sind jedoch Carbonsäure-Gruppen (Carboxyl-Gruppen). Vorzugsweise weist die organische Säure daher wenigstens zwei, besonders bevorzugt wenigstens drei Carboxyl-Gruppen auf. Die eingesetzte wenigstens eine organische Säure ist somit vorzugsweise eine Carbonsäure, besonders bevorzugt eine Carbonsäure mit wenigstens zwei oder wenigstens drei Carboxyl-Gruppen. Beispiele für einsetzbare organische Säuren sind Zitronensäure, Milchsäure, Oxalsäure, Malonsäure, Bernsteinsäure, Glutarsäure, Adipinsäure, Pimelinsäure, Suberinsäure, Azelainsäure, Sebacinsäure, Weinsäure, Äpfelsäure, Asparaginsäure, Oxalbernsteinsäure, Trimellitsäure, Isocitronensäure und Aconitsäure sowie Mischungen davon. Analog können auch die entsprechenden Anhydride eingesetzt werden.

Vorzugsweise ist die Oberfläche der als Komponente (B) eingesetzten Aluminiumoxidhydroxid-Partikel zumindest teilweise mit Zitronensäure als wenigstens eine organische Säure modifiziert.

Vorzugsweise liegen die als Komponente (B) eingesetzten Aluminiumoxidhydroxid-Partikel in der wässrigen Beschichtungsmittelzusammensetzung als Partikel vor, die eine mittlere Partikelgröße (d₅₀) von ≤750 nm aufweisen, wobei unter der mittleren Partikelgröße das arithmetische Zahlenmittel des mittleren Partikeldurchmessers verstanden wird, und die Bestimmung der mittleren Partikelgröße mittels Photonenkorrelationsspektroskopie (PCS) erfolgt. Besonders bevorzugt liegen die als Komponente (B) eingesetzten Aluminiumoxidhydroxid-Partikel in der wässrigen Beschichtungsmittelzusammensetzung als Partikel vor, die eine mittlere Partikelgröße in einem Bereich von ≥75 nm bis ≤750 nm aufweisen. Vorzugsweise erfolgt die Bestimmung der mittleren Partikelgröße mit dem Gerät "Zetasizer Nano S-173" der Firma Malvern Instruments gemäß DIN ISO 13321 (Datum: Oktober 2004) in einer wässrigen Dispersion enthaltend 0,01 bis 0,1 Gew.-% der Partikel (B), besonders bevorzugt bei einem pH-Wert im Bereich von >7,5 bis 11.

Vorzugsweise liegen die als Komponente (B) eingesetzten Aluminiumoxidhydroxid-Partikel in der wässrigen Beschichtungsmittelzusammensetzung als Partikel vor, die eine mittlere Partikelgröße in einem Bereich von ≥75 nm bis ≤300 nm aufweisen, wobei unter der mittleren Partikelgröße das arithmetische Zahlenmittel des mittleren Partikeldurchmessers verstanden wird und die Bestimmung der mittleren Partikelgröße mittels Photonenkorrelationsspektroskopie (PCS) gemäß DIN ISO 13321 (Datum: Oktober 2004) mit dem Gerät "Zetasizer Nano S-173" der Firma Malvern Instruments in einer wässrigen Dispersion enthaltend 0,1 Gew.-% der Partikel (B) bei einem pH-Wert von 9,3 erfolgt. Besonderes bevorzugt liegen die Aluminiumoxidhydroxid-Partikel dabei als Partikel vor, die eine mittlere Partikelgröße in einem Bereich von ≥100 nm bis ≤250 nm, ganz besonders bevorzugt ≥100 nm bis ≤200 nm aufweisen.

Vorzugsweise liegen die als Komponente (B) eingesetzten Aluminiumoxidhydroxid-Partikel in der wässrigen Beschichtungsmittelzusammensetzung als Partikel vor, die eine mittlere Partikelgröße in einem Bereich von ≥50 nm bis ≤600 nm aufweisen, wobei unter der mittleren Partikelgröße das arithmetische Zahlenmittel des mittleren Partikeldurchmessers verstanden wird und die Bestimmung der mittleren Partikelgröße mittels Photonenkorrelationsspektroskopie (PCS) gemäß DIN ISO 13321 (Datum: Oktober 2004) mit dem Gerät "Zetasizer Nano S-173" der Firma Malvern Instruments in einer wässrigen Dispersion der Partikel (B) erfolgt. Besonderes bevorzugt liegen die Aluminiumoxidhydroxid-Partikel dabei als Partikel vor, die eine mittlere Partikelgröße in einem Bereich von ≥100nm bis ≤550 nm, ganz besonders bevorzugt ≥120 nm bis ≤500 nm aufweisen.

Vorzugsweise weisen die zur Herstellung der erfindungsgemäßen wässrigen Beschichtungsmittelzusammensetzung eingesetzten Partikel (B) vor ihrer Einarbeitung in die Zusammensetzung, also in Form eines festen Pulvers vorliegend, eine mittlere Teilchengröße in einem Bereich von 5 bis 50 µm, besonders bevorzugt in einem Bereich von 15 bis 45 µm, ganz besonders bevorzugt in einem Bereich von 20 bis 40 µm, auf. Die Bestimmung der mittleren Teilchengröße erfolgt hier mit dem Gerät "Mastersizer 3000" der Firma Malvern Instruments bei 25 ± 1 °C in dessen Aero-Einheit. Dabei wird unter der mittleren Teilchengröße in diesem Zusammenhang das Volumenmittel des gemessenen mittleren Partikeldurchmessers *(V-average mean)* verstanden.

Vorzugsweise weisen die zur Herstellung der erfindungsgemäßen wässrigen Beschichtungsmittelzusammensetzung eingesetzten Partikel (B) vor ihrer Einarbeitung in die Zusammensetzung, also in Form eines festen Pulvers vorliegend, eine Kristallit-Partikelgröße in einem Bereich von 5 bis 80 nm, besonders bevorzugt in einem Bereich von 7,5 bis 50 nm auf. Die Bestimmung der Kristallit-Partikelgröße erfolgt hier mittels Röntgendiffraktrometrie unter Einsatz konventioneller Röntgendiffraktrometer der Firmen Siemens oder Philips.

Vorzugsweise weisen die als Komponente (B) eingesetzten Aluminiumoxidhydroxid-Partikel eine elektrische Leitfähigkeit von >750 µS/cm auf, besonders bevorzugt eine elektrische Leitfähigkeit in einem Bereich von >750 µS/cm bis 2500 µS/cm, insbesondere bei Einarbeitung dieser Partikel (B) in eine wässrige Dispersion enthaltend diese Partikel in einer Menge von 15 bis 25 Gew.-%, am meisten bevorzugt bei Einarbeitung dieser Partikel (B) in eine wässrige Dispersion enthaltend diese Partikel in einer Menge von 20 Gew.-%, jeweils bezogen auf das Gesamtgewicht einer solchen Dispersion. Ganz besonders bevorzugt weisen die als Komponente (B) eingesetzten Aluminiumoxidhydroxid-Partikel dabei eine elektrische Leitfähigkeit in einem Bereich von 800 µS/cm bis 2000 µS/cm auf. Dies ist im Hinblick auf den Wunsch eine möglichst geringe elektrische Leitfähigkeit der erfindungsgemäßen Beschichtungsmittelzusammensetzung wie einem erfindungsgemäßen Basislack vorteilhaft, da damit eine höhere Stabilität einhergeht.

Vorzugsweisen weisen die als Komponente (B) eingesetzten Aluminiumoxidhydroxid-Partikel einen isoelektrischen Punkt von < pH 10, besonders bevorzugt von < pH 9 auf, jeweils bevorzugt dabei von ≥7,5.

### Weitere optionale Komponenten

Die erfindungsgemäße wässrige Beschichtungsmittelzusammensetzung kann wenigstens eine weitere optionale Komponente enthalten, die von den Komponenten (A), (B) und Wasser verschieden ist.

### Pigmente & Füllstoffe als weitere optionale Komponente(n)

Die erfindungsgemäße wässrige Beschichtungsmittelzusammensetzung kann wenigstens ein Pigment und/oder wenigstens einen Füllstoff enthalten. Der Begriff "Pigment" umfasst dabei Farbpigmente und Effektpigmente.

Ein Fachmann ist mit dem Begriff der Effektpigmente vertraut. Eine entsprechende Definition findet sich beispielsweise im Römpp Lexikon, Lacke und Druckfarben, Georg Thieme Verlag, 1998, 10. Auflage, Seiten 176 und 471. Eine Definition von Pigmentgen im Allgemeinen und weitere Spezifizierungen davon sind in der DIN 55943 (Datum: Oktober 2001) geregelt. Vorzugsweise handelt es sich bei Effektpigmenten um solche Pigmente, die optisch effektgebend oder farb- und optisch effektgebend, insbesondere optisch effektgebend, sind. Die Begriffe "optisch effektgebendes und farbgebendes Pigment", "optisch effektgebendes Pigment" und "Effektpigment" sind daher vorzugsweise austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente (Mica) und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt werden blättchenförmige Effektpigmente, insbesondere blättchenförmige Aluminiumpigmente und Metalloxid-Glimmer-Pigmente eingesetzt. Vorzugsweise wird als wenigstens ein Effektpigment zur Herstellung der erfindungsgemäßen Beschichtungsmittelzusammensetzung daher als wenigstens ein Effektpigment wenigstens ein Metalleffektpigment wie wenigstens eine vorzugsweise bättchenförmiges Aluminiumeffektpigment und/oder wenigstens ein Metalloxid-Glimmer-Pigment eingesetzt.

Der Anteil der Effektpigmente in der Beschichtungsmittelzusammensetzung liegt vorzugsweise im Bereich von 1,0 bis 25,0 Gew.-%, bevorzugt 1,5 bis 20,0 Gew.-%, besonders bevorzugt 2,0 bis 15,0 Gew.-%, jeweils bezogen auf das Gesamtgewicht der wässrigen Beschichtungsmittelzusammensetzung.

Ein Fachmann ist mit dem Begriff der Farbpigmente vertraut. Die Begriffe "farbgebendes Pigment" und "Farbpigment" sind austauschbar. Als Farbpigment können anorganische und/oder organische Pigmente eingesetzt werden. Vorzugsweise ist das Farbpigment ein anorganisches Farbpigment. Als besonders bevorzugte Farbpigmente werden Weißpigmente, Buntpigmente und/oder Schwarzpigmente eingesetzt. Beispiele für Weißpigmente sind Titandioxid, Zink-Weiß, Zinksulfid und Lithopone. Beispiele für Schwarzpigmente sind Ruß, Eisen-Mangan-Schwarz und Spinellschwarz. Beispiele für Buntpigmente sind Chromoxid, Chromoxidhydratgrün, Kobaltgrün, Ultramaringrün, Kobaltblau, Ultramarinblau, Manganblau, Ultramarinviolett, Kobalt- und Manganviolett, Eisenoxidrot, Cadmiumsulfoselenid, Molybdatrot und Ultramarinrot, Eisenoxidbraun, Mischbraun, Spinell- und Korundphasen und Chromorange, Eisenoxidgelb, Nickeltitangelb, Chromtitangelb, Cadmiumsulfid, Cadmiumzinksulfid, Chromgelb und Bismutvanadat.

Der Anteil der Farbpigmente in der Beschichtungsmittelzusammensetzung liegt vorzugsweise im Bereich von 1,0 bis 40,0 Gew.-%, bevorzugt 2,0 bis 35,0 Gew.-%, besonders bevorzugt 5,0 bis 30,0 Gew.-%, jeweils bezogen auf das Gesamtgewicht der wässrigen Beschichtungsmittelzusammensetzung.

Vorzugsweise enthält die erfindungsgemäße wässrige Beschichtungsmittelzusammensetzung als Pigment oder Pigmente ausschließlich ein oder mehrere Farbpigmente. Mit anderen Worten enthält die erfindungsgemäße wässrige Beschichtungsmittelzusammensetzung vorzugsweise kein bzw. keine Effektpigment(e).

Der Begriff "Füllstoff" ist dem Fachmann bekannt, beispielsweise aus der DIN 55943 (Datum: Oktober 2001). Unter einem "Füllstoff" wird im Sinne der vorliegenden Erfindung eine im Anwendungsmedium wie beispielsweise der erfindungsgemäßen Beschichtungsmittelzusammensetzung im Wesentlichen unlösliche Substanz verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt, für Pigmente dagegen ≥1,7 beträgt. Beispiele geeigneter Füllstoffe sind Kaolin, Dolomit, Calcit, Kreide, Calciumsulfat, Bariumsulfat, Talkum, Kieselsäuren, insbesondere pyrogene Kieselsäuren, Hydroxide wie Aluminiumhydroxid oder Magnesiumhydroxid oder organische Füllstoffe wie Textilfasern, Cellulosefasern und/oder Polyethylenfasern; ergänzend wird auf Römpp Lexikon Lacke und Druckfarben, Georg Thieme Verlag, 1998, Seiten 250 ff., «Füllstoffe», verwiesen.

Der Anteil der Füllstoffe in der Beschichtungsmittelzusammensetzung liegt vorzugsweise im Bereich von 1,0 bis 40,0 Gew.-%, bevorzugt 2,0 bis 35,0 Gew.-%, besonders bevorzugt 5,0 bis 30,0 Gew.-%, jeweils bezogen auf das Gesamtgewicht der wässrigen Beschichtungsmittelzusammensetzung.

### Verdicker als weitere optionale Komponente

Die erfindungsgemäße wässrige Beschichtungsmittelzusammensetzung kann optional noch mindestens einen Verdicker (auch als Verdickungsmittel bezeichnet) enthalten. Wie bereits vorstehend erwähnt, ist dieser dann verschieden von den Komponenten (A) und (B).

Beispiele für derartige Verdicker sind anorganische Verdicker, beispielsweise Metallsilikate wie Schichtsilikate, und organische Verdicker, beispielsweise Poly(meth)acrylsäure-Verdicker und/oder (Meth)acrylsäure-(Meth)acrylatCopolymerisat-Verdicker, Polyurethan-Verdicker sowie polymere Wachse. Das Metallsilikat wird bevorzugt aus der Gruppe der Smektite ausgewählt. Besonders bevorzugt werden die Smektite aus der Gruppe der Montmorillonite und Hectorite ausgewählt. Insbesondere werden die Montmorillonite und Hectorite aus der Gruppe bestehend aus Aluminium-Magnesium-Silikaten sowie Natrium-Magnesium- und Natrium-Magnesium-Fluor-Lithium-Schichtsilikaten, ausgewählt. Diese anorganischen Schichtsilikate werden zum Beispiel unter der Marke Laponite^{®} vertrieben. Vorzugsweise enthält die erfindungsgemäße Beschichtungsmittelzusammensetzung jedoch kein solches anorganisches Schichtsilikat und insbesondere kein Aluminium-Magnesium-Silikat, Natrium-Magnesium- und/oder Natrium-Magnesium-Fluor-Lithium-Schichtsilikat. Verdickungsmittel auf Basis von Poly(meth)acrylsäure und (Meth)acrylsäure-(Meth)acrylat-Copolymerisat-Verdicker sind gegebenenfalls vernetzt und/oder mit einer geeigneten Base neutralisiert. Beispiele solcher Verdickungsmittel sind "Alkali Swellable Emulsions" (ASE), und hydrophob modifizierte Varianten davon, die "Hydrophically modified Alkali Swellable Emulsions" (HASE). Vorzugsweise sind diese Verdickungsmittel anionisch. Entsprechende Produkte wie Rheovis^{®} AS 1130 sind kommerziell erhältlich. Verdickungsmittel auf Basis von Polyurethanen (z.B. Polyurethan-Assoziativ-Verdickungsmittel) sind gegebenenfalls vernetzt und/oder mit einer geeigneten Base neutralisiert. Entsprechende Produkte wie Rheovis^{®} PU 1250 sind kommerziell erhältlich. Als polymere Wachse eignen sich beispielsweise gegebenenfalls modifizierte polymere Wachse auf Basis von Ethylen-Vinylacetat-Copolymeren. Ein entsprechendes Produkt ist zum Beispiel unter der Bezeichnung Aquatix^{®} 8421 kommerziell erhältlich.

Vorzugsweise liegt der wenigstens eine Verdicker in der erfindungsgemäßen Beschichtungsmittelzusammensetzung in einer Menge von höchstens 10 Gew.-%, besonders bevorzugt von höchstens 7,5 Gew.-%, ganz besonders bevorzugt von höchstens 5 Gew.-%, insbesondere von höchstens 3 Gew.-%, am meisten bevorzugt von höchstens 2 Gew.-%, jeweils bezogen auf das Gesamtgewicht der Beschichtungsmittelzusammensetzung, vor. Die Mindestmenge an Verdicker liegt dabei vorzugsweise jeweils bei 0,1 Gew.-%, bezogen auf das Gesamtgewicht der Beschichtungsmittelzusammensetzung.

### Konventionelle Additive als weitere optionale Komponente(n)

Die erfindungsgemäße Beschichtungsmittelzusammensetzung kann je nach erwünschter Anwendung ein oder mehrere üblicherweise eingesetzte Additive als weitere optionale Komponente(n) enthalten. Beispielsweise kann die Beschichtungsmittelzusammensetzung wie bereits vorstehend ausgeführt einen bestimmten Anteil an wenigstens einem organischen Lösemittel enthalten. Ferner kann die Beschichtungsmittelzusammensetzung wenigstens ein Additiv ausgewählt aus der Gruppe bestehend aus Reaktivverdünnern, Lichtschutzmitteln, Antioxidantien, Entlüftungsmitteln, Emulgatoren, Slipadditiven, Polymerisationsinhibitoren, Initiatoren für radikalische Polymerisationen, Haftvermittlern, Verlaufsmitteln, filmbildenden Hilfsmitteln, Sag-Control-Agents (SCAs), Flammschutzmitteln, Korrosionsinhibitoren, Sikkativen, Bioziden und Mattierungsmitteln enthalten. Sie können in den bekannten und üblichen Anteilen eingesetzt werden. Vorzugsweise liegt deren Gehalt, bezogen auf das Gesamtgewicht der erfindungsgemäßen Beschichtungsmittelzusammensetzung bei 0,01 bis 20,0 Gew.-%, noch bevorzugter bei 0,05 bis 15,0 Gew.-%, besonders bevorzugt bei 0,1 bis 10,0 Gew.-%, ganz besonders bevorzugt bei 0,1 bis 7,5 Gew.-%, insbesondere bei 0,1 bis 5,0 Gew.-% und am meisten bevorzugt bei 0,1 bis 2,5 Gew.-%.

### Verfahren zur Herstellung

Die Herstellung der Beschichtungsmittelzusammensetzung kann unter Einsatz der für die Herstellung von Beschichtungsmittelzusammensetzungen üblichen und bekannten Mischverfahren und Mischaggregaten erfolgen, bzw. unter Einsatz von üblichen Dissolvern und/oder Rührern.

### Verfahren zur Herstellung einer Mehrschichtlackierung & Mehrschichtlackierung

Ein weiterer Gegenstand der vorliegenden Erfindung ist ein Verfahren zur Herstellung einer mehrschichtigen Lackierung (Mehrschichtlackierung), bei dem
(1a) ein wässriger Basislack auf ein gegebenenfalls beschichtetes Substrat aufgebracht wird,
(2a) aus dem in Stufe (1a) aufgebrachten Lack ein Polymerfilm gebildet wird,
(1b) gegebenenfalls auf den so gebildeten Polymerfilm ein weiterer wässriger Basislack aufgebracht wird,
(2b) gegebenenfalls aus dem in Stufe (1b) aufgebrachten Lack ein Polymerfilm gebildet wird,
(3) auf die so erhaltene(n) Basislackschicht(en) ein Klarlack aufgebracht wird und anschließend
(4) die Basislackschicht(en) zusammen mit der Klarlackschicht gemeinsam gehärtet wird bzw. werden,
welches dadurch gekennzeichnet ist, dass die erfindungsgemäße Beschichtungsmittelzusammensetzung in Stufe (1a) als Basislack oder - sofern das Verfahren zudem die Stufen (1b) und (2b) umfasst - in Stufe (1a) und/oder (1b) als Basislack, vorzugsweise nur in Stufe (1b) als Basislack, eingesetzt wird.

Vorzugsweise umfasst das erfindungsgemäß Verfahren die Stufen (1b) und (2b) umfasst und das in Stufe (1a) eingesetzte Substrat ist ein metallisches Substrat, dessen in Stufe (1a) zu beschichtende Oberfläche wenigstens mit einer vorzugsweise ausgehärteten Elektrotauchlackschicht versehen ist.

Alle vorstehend genannten (bevorzugten) Ausführungen hinsichtlich der erfindungsgemäßen Beschichtungsmittelzusammensetzung gelten auch für das erfindungsgemäße Verfahren. Das Verfahren wird vorzugsweise zur Herstellung von effektgebenden oder farbgebenden oder farb- und effektgebenden Mehrschichtlackierungen eingesetzt.

Die Applikation des Basislacks in Stufe (1a) kann auf wenigstens mit Füller oder Grundierfüller vorbehandelte Metall- oder Kunststoffsubstrate erfolgen. In diesem Fall enthält das erfindungsgemäße Verfahren vorzugsweise nicht die Stufen (1b) und (2b).

Der Basislack kann in Stufe (1a) aber auch ohne den Einsatz eines Füllers oder Grundierfüllers auf das Substrat aufgebracht werden werden, wobei insbesondere das dann eingesetzte Metallsubstrat in diesem Fall vorzugsweise eine Elektrotauchlackschicht aufweist.

Soll ein Metallsubstrat beschichtet werden, so wird dieses vor der Applikation des Füllers oder Grundierfüllers oder des Basislacks gemäß Stufe (1a) bevorzugt noch mit einer Elektrotauchlackierung beschichtet. Wird ein Kunststoffsubstrat beschichtet, so wird dieses vor der Applikation des Füllers oder Grundierfüllers oder des Basislacks gemäß Stufe (1a) bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Vorzugsweise weist das in Stufe (1a) eingesetzte Substrat eine Elektrotauchlackschicht (ETL) als (Vor)beschichtung auf, besonders bevorzugt eine mittels kathodischer Abscheidung eines Elektrotauchlacks aufgebrachte Elektrotauchlackschicht, und der in Stufe (1a) eingesetzte Basislack wird direkt auf das ETL-beschichtete vorzugsweise metallische Substrat aufgebracht, wobei die auf dem Substrat aufgebrachte Elektrotauchlackschicht (ETL) bei Durchführung der Stufe (1a) vorzugsweise bereits ausgehärtet ist. In Stufe (4) werden dann vorzugsweise die auf das mit einer vorzugsweise kathodischen ausgehärteten Elektrotauchlackschicht beschichte vorzugsweise metallische Substrat gemäß den Stufen (1a) und (2a) aufgebrachte Basislackschicht, die gemäß den Stufen (1b) und (2b) optional darauf aufgebrachte weitere Basislackschicht, und die gemäß Stufe (3) wiederum darauf aufgebrachte Klarlackschicht, gemeinsam gehärtet. Insbesondere in diesem Fall enthält das erfindungsgemäße Verfahren vorzugsweise die Stufen (1b) und (2b), d.h. es werden wenigstens zwei Basislackschichten aufgetragen, wobei die erfindungsgemäße Beschichtungsmittelzusammensetzung innerhalb der Stufen (1a) und/oder (1b) als Basislack, besonders bevorzugt nur innerhalb der Stufe (1b) als Basislack eingesetzt wird.

Die Applikation des oder der erfindungsgemäßen wässrigen Beschichtungsmittelzusammensetzung(en) als Basislack(e) kann in den im Rahmen der Automobilindustrie üblichen Schichtdicken im Bereich von beispielsweise 5 bis 100 Mikrometer, bevorzugt 5 bis 60 Mikrometer, insbesondere bevorzugt 5 bis 30 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Nach der Applikation des oder der erfindungsgemäßen wässrigen Beschichtungsmittelzusammensetzung(en) als Basislack(e) kann dieser bzw. können diese nach bekannten Methoden getrocknet werden. Beispielsweise können (1-Komponenten)-Basislacke, welche bevorzugt sind, bei Raumtemperatur (20-23°C) für 1 bis 60 Minuten abgelüftet werden und darauf folgend bevorzugt bei gegebenenfalls leicht erhöhten Temperaturen von 25 oder 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird, beziehungsweise noch kein vollständig vernetzter Lackfilm gebildet wird.

Umfasst das erfindungsgemäße Verfahren die Stufen (1b) und (2b) so erfolgt vorzugsweise entweder nach Bildung des Polymerfilms gemäß Stufe (2a) und vor Durchführung von Schritt (1b) ein Ablüften bzw. eine Trockung bei Raumtemperatur (20-23°C) oder bei darüber liegenden Temperaturen bis 90°C für 1 bis 60 Minuten oder es erfolgt nach Bildung des Polymerfilms gemäß Stufe (2a) und vor Durchführung von Schritt (1b) kein Ablüften und keine Trocknung.

Dann wird ein handelsüblicher Klarlack gemäß Stufe (3) nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur (20-23°C) für beispielsweise 1 bis 60 Minuten abgelüftet und gegebenenfalls getrocknet werden. Dann wird der Klarlack zusammen mit dem oder den applizierten Basislack(en) gehärtet. Dabei finden beispielsweise Vernetzungsreaktionen statt, wodurch eine erfindungsgemäße effektgebende, farbgebende und/oder farb- und effektgebende mehrschichtige Lackierung auf einem Substrat hergestellt wird. Die Härtung erfolgt bevorzugt thermisch bei Temperaturen von 60 bis 200°C. Die Beschichtung von Kunststoffsubstraten erfolgt analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden. Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Bei dem besagten Substrat aus Stufe (1a) kann es sich auch um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll. Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben.

Ein weiterer Gegenstand der vorliegenden Erfindung ist eine Mehrschichtlackierung, die gemäß dem erfindungsgemäßen Verfahren zur Herstellung einer mehrschichtigen Lackierung (Mehrschichtlackierung) erhältlich ist.

Alle vorstehend genannten (bevorzugten) Ausführungen hinsichtlich der erfindungsgemäßen Beschichtungsmittelzusammensetzung und des erfindungsgemäßen Verfahrens gelten auch für die erfindungsgemäße Mehrschichtlackierung.

### Bestimmungsmethoden

### 1. Bestimmung des nicht-flüchtigen Anteils

Die Bestimmung des nicht-flüchtigen Anteils (des Festkörpers, also des Festkörpergehalts) erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

### 2. Bestimmung der mittleren Teilchengröße der in der Beschichtungsmittelzusammensetzung vorliegenden Partikel (B)

Die mittlere Teilchengröße der erfindungsgemäß eingesetzten in der Beschichtungsmittelzusammensetzung vorliegenden Aluminiumoxidhydroxid-Partikel wird mittels dynamischer Lichtstreuung (Photonenkorrelationsspektroskopie) (PCS) gemäß DIN ISO 13321 (Datum: Oktober 2004) bestimmt. Zur Messung eingesetzt wird dabei ein "Zetasizer Nano S-173" der Firma Malvern Instruments bei 25 ± 1 °C. Die jeweiligen Proben der zu untersuchenden Partikel werden mit partikelfreiem, deionisierten Wasser als Dispergiermedium (Milliporewasser) auf eine Messkonzentration im Bereich von 0,01% bis 0,1% verdünnt und anschließend für eine Dauer von mindestens 30 Minuten bei 600 RPM mittels eines Magnetrührers homogenisiert. Gegebenenfalls kann vor der Dispergierung wässrige NaOH-Lösung zur Erhöhung des pH-Wertes zugefügt werden. Es wird sieben Mal gemessen. Dabei wird unter der mittleren Teilchengröße das arithmetische Zahlenmittel des gemessenen mittleren Partikeldurchmessers *(z-average mean;* Zahlenmittel) verstanden.

### 3. Bestimmung der Schichtdicken

Die Bestimmung der Schichtdicken erfolgt nach DIN EN ISO 2808 (Datum: Mai 2007), Verfahren 12A unter Verwendung des Messgerätes MiniTest^{®} 3100-4100 der Firma ElektroPhysik.

### 4. Bestimmung der Appearance

Die Beurteilung der Appearance erfolgt durch eine entsprechende Beurteilung der zu untersuchenden beschichteten Substrate und wird mit einem Wave scan Messgerät der Firma Byk/Gardner durchgeführt. Die mit einer Mehrschichtlackierung beschichteten zu untersuchenden Substrate werden dabei wie folgt hergestellt: Ein mit einer Standard-KTL (CathoGuard^{®} 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird analog DIN EN ISO 28199-1, Punkt 8.2 (Ausführung A) vorbereitet. Anschließend erfolgt eine Applikation der zu untersuchenden Probe wie ein erfindungsgemäßer Basislack elektrostatisch mit einer Zielschichtdicke (Schichtdicke des getrockneten Materials) von 25 µm. Die resultierende Schicht wird ohne vorherige Ablüftzeit im Umluftofen für 10 Minuten bei 70 °C getrocknet und anschließend mit einem handelsüblichen 2K-Klarlack der Handelsmarke FF99-0374 (erhältlich bei BASF Coatings GmbH) überlackiert. Der resultierende Klarlack weist eine Schichtdicke von 40 µm auf. Der Klarlack wurde bei 140°C über 20 Minuten ausgehärtet. Zum Zweck der Beurteilung der Appearance wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Außerdem wird als Maß der Schärfe eines in der Oberfläche des Mehrschichtaufbaus reflektierten Bildes mit Hilfe des Messgerätes die Kenngröße "distinctness of image" (DOI) bestimmt (je höher der Wert, desto besser ist das Erscheinungsbild).

### 5. Beurteilung des Auftretens von Kochern, Läufern und Nadelstichen

### Beurteilung des Auftretens von Läufern - Variante a)

Diese Beurteilung erfolgt durch eine entsprechende Beurteilung der zu untersuchenden beschichteten Substrate. Dafür werden zunächst werden Mehrschichtlackierungen wie folgt hergestellt: Ein mit einer Standard-KTL (CathoGuard^{®} 800 der Firma BASF Coatings GmbH) beschichtetes Lochblech mit diagonal gestanzten Löchern der Abmessungen 57 cm x 20 cm aus Stahl (gemäß DIN EN ISO 28199-1 Datum: Januar 2010, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 eine Applikation der zu untersuchenden Probe wie eines erfindungsgemäßen Basislacks elektrostatisch in einem Einmalauftrag als Keil mit einer Zielschichtdicke (Schichtdicke des getrockneten Materials) im Bereich von 5 µm bis 35 µm über eine elektrostatisch unterstützte Glockenapplikation (1 Hit ESTA). Die resultierende Schicht wird ohne vorherige Ablüftzeit im Umluftofen, nach 4 Minuten bei Raumtemperatur für 10 Minuten bei 70 °C getrocknet und nach einer 10 Minütigen Ablüftzeit bei RT bei 140°C über 20 Minuten ausgehärtet. Variante a) wird für Basislacke eingesetzt, die wenigstens ein Schwarzpigment aufweisen.

### Beurteilung des Auftretens von Läufern - Variante b)

Die Beurteilung gemäß Variante b) erfolgt wie für Variante a) beschrieben, jedoch mit dem Unterschied, dass vor Applikation des Basislacks eine elektrostatische Applikation eines Nass-in-Nass Primers (Color Pro 1, FA107170, erhältlich bei BASF Coatings GmbH) mit einer Zielschichtdicke von 14 µm erfolgt und die so erhaltenen Bleche 4 Minuten bei Raumtemperatur abgelüftet wurden, bevor die Applikation des Basislacks erfolgt. Variante b) wird für Basislacke eingesetzt, die wenigstens ein Rotpigment aufweisen.

### Beurteilung des Auftretens von Kochern und Nadelstichen - Variante a)

Diese Beurteilung erfolgt durch eine entsprechende Beurteilung der zu untersuchenden beschichteten Substrate. Dafür werden zunächst werden Mehrschichtlackierungen wie folgt hergestellt: Ein mit einer Standard-KTL (CathoGuard^{®} 800 der Firma BASF Coatings GmbH) beschichtetes Lochblech mit diagonal gestanzten Löchern der Abmessungen 57 cm x 20 cm aus Stahl (gemäß DIN EN ISO 28199-1 Datum: Januar 2010, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 eine Applikation der zu untersuchenden Probe wie eines erfindungsgemäßen Basislacks elektrostatisch in einem Einmalauftrag als Keil mit einer Zielschichtdicke (Schichtdicke des getrockneten Materials) im Bereich von 5 µm bis 35 µm über eine elektrostatisch unterstützte Glockenapplikation (1 Hit ESTA). Die resultierende Schicht wird ohne vorherige Ablüftzeit im Umluftofen, nach 4 Minuten bei Raumtemperatur für 10 Minuten bei 70 °C getrocknet und anschließend mit einem handelsüblichen 2K-Klarlack der Handelsmarke ProGloss ^{®} Typ FF99-0374 (erhältlich bei BASF Coatings GmbH) überlackiert. Die resultierenden Schichtdicken der Basislacke liegen zwischen 5 µm und 35 µm, der resultierende Klarlack weist eine mittlere Schichtdicke von 40 µm auf. Der Klarlack wurde dabei bei 140°C über 20 Minuten ausgehärtet. Variante a) wird für Basislacke eingesetzt, die wenigstens ein Schwarzpigment aufweisen.

### Beurteilung des Auftretens von Kochern und Nadelstichen - Variante b)

Die Beurteilung gemäß Variante b) erfolgt wie für Variante a) beschrieben, jedoch mit dem Unterschied, dass vor Applikation des Basislacks eine elektrostatische Applikation eines Nass-in-Nass Primers (Color Pro 1, FA107170, erhältlich bei BASF Coatings GmbH) mit einer Zielschichtdicke von 14 µm erfolgt und die so erhaltenen Bleche 4 Minuten bei Raumtemperatur abgelüftet wurden, bevor die Applikation des Basislacks erfolgt. Variante b) wird für Basislacke eingesetzt, die wenigstens ein Rotpigment aufweisen.

Die Bestimmung der Kochergrenze, d.h. derjenigen Schichtdicke, ab der Kocher auftreten, erfolgt nach DIN EN ISO 28199-3, Datum: Januar 2010, Punkt 5. Die Bestimmung erfolgt dabei sowohl waagerecht als auch senkrecht. Die Bestimmung der Nadelstichgrenze, d.h. derjenigen Schichtdicke, ab der das Auftreten von Nadelstichen beobachtet wird, erfolgt visuell. Die Bestimmung kann dabei sowohl waagerecht als auch senkrecht erfolgen. Die Bestimmung der derjenigen Schichtdicke, ab der Läufer auftreten, erfolgt nach DIN EN ISO 28199-3, Datum: Januar 2010, Punkt 4 durchgeführt. Die Bestimmung erfolgt dabei senkrecht.

### 6. Bestimmung der elektrischen Leitfähigkeit

Die Bestimmung der elektrischen Leitfähigkeit erfolgt gemäß DIN EIN ISO 15091 (April 2013) unter Einsatz der Geräts "SevenCompact Mettler Toledo" bei 25±1°C und einer Zellkonstante von 0,549233/cm.

### 7. Bestimmung der Hydroxyl-Zahl (OH-Zahl)

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

### Beispiele und Vergleichsbeispiele

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

### I. Bestimmung der mittleren Teilchengröße der eingesetzten oberflächen-modifizierten Böhmit-Produkte innerhalb daraus hergestellter wässriger Dispersionen

Es wurden die mittleren Partikelgrößen von verschiedenen kommerziell erhältlichen oberflächen-modifizierten Böhmit-Produkten ermittelt, nämlich der Produkte "Disperal^{®} HP 14/7", " Disperal^{®} HP 10/7" und "Disperal^{®} HP 18/7" der Firma Sasol. Bei allen diesen Produkten handelt es sich um Böhmit-Partikel, deren Oberfläche mit Zitronensäure modifiziert worden ist. Dabei wurde die mittlere Partikelgröße jeweils gemäß der vorstehend beschriebenen Methode ermittelt, wobei eine Messkonzentration von 0,01% eingestellt, für eine Dauer von 30 Minuten bei 600 RPM mittels eines Magnetrührers homogenisiert und keine NaOH-Lösung eingesetzt worden ist. Der pH-Wert der so erhaltenen Dispersionen liegt bei pH 8,1. Dabei ergaben sich folgende mittlere Partikelgrößen (d₅₀, *z-average mean)* in der jeweils hergestellten wässrigen Dispersion:

| | |
|---|---|
| Disperal^{®} HP 10/7: | 478 nm ± 6 nm |
| Disperal^{®} HP 14/7: | 357 nm ± 4 nm |
| Disperal^{®} HP 18/7: | 357 nm ± 4 nm. |

### II. Bestimmung der elektrischen Leitfähigkeit der eingesetzten oberflächen-modifizierten Böhmit-Produkte innerhalb daraus hergestellter wässriger Dispersionen

Es wurden jeweils wässrige Dispersionen der verschiedenen kommerziell erhältlichen oberflächen-modifizierten Böhmit-Produkte "Disperal^{®} HP 14/7"," Disperal^{®} HP 10/7" und "Disperal^{®} HP 18/7" der Firma Sasol hergestellt (jeweils 20 Gew.-% in Wasser) und deren elektrische Leitfähigkeit bestimmt. Die Bestimmung erfolgte gemäß der vorstehend beschriebenen Methode. Dabei ergaben sich folgende elektrische Leitfähigkeiten:

| | |
|---|---|
| Disperal^{®} HP 10/7 (20 Gew.-% in Wasser): | 963 µS/cm |
| Disperal^{®} HP 14/7 (20 Gew.-% in Wasser): | 1370 µS/cm |
| Disperal^{®} HP 18/7 (20 Gew.-% in Wasser): | 1570 µS/cm |

### III. Untersuchung der Stabilität der eingesetzten oberflächen-modifizierten Böhmit-Produkte mit verschiedenen Aminen

Es wurden jeweils wässrige Dispersionen der verschiedenen kommerziell erhältlichen oberflächen-modifizierten Böhmit-Produkte "Disperal^{®} HP 14/7", "Disperal^{®} HP 10/7" und "Disperal^{®} HP 18/7" der Firma Sasol hergestellt (jeweils 15 Gew.-% in Wasser). Zu diesen Dispersionen wurde jeweils eine wässrige Lösung von Dimethylethanolamin (DMEA) gegeben und die Stabilität der Dispersion gegenüber Aminen über den Verlauf von 31 Tagen untersucht. Als Maß für die Stabilität dient die Änderung des pH-Werts der Dispersion. Eine Änderung bis zu 8%, bezogen auf den Ausgangs-pH-Wert wird als stabil angesehen. Tabelle III fasst die Ergebnisse zusammen.

**Tabelle III**

| *Mischung* | *pH-Wert direkt nach Zugabe* | *pH-Wert 24 h nach Zugabe* | *pH-Wert 14 Tage nach Zugabe* | *pH-Wert 22 Tage nach Zugabe* | *pH-Wert 31 Tage nach Zugabe* |
|---|---|---|---|---|---|
| Mischung aus Disperal^{®} HP 10/7 (15 Teile) und 85 Teile Wasser; Zugabe von 6,5 Teilen DMEA in Wasser (10 Gew.-%ig) | 8,68 | 8,43 | 8,13 | 8,20 | 8,15 |
| Mischung aus Disperal^{®} HP 14/7 (15 Teile) und 85 Teile Wasser; Zugabe von 9 Teilen DMEA in Wasser (10 Gew.-%ig) | 8,76 | 8,30 | 8,05 | 8,13 | 8,11 |
| Mischung aus Disperal^{®} HP 18/7 (15 Teile) und 85 Teile Wasser; Zugabe von 10,5 Teilen DMEA in Wasser (10 Gew.-%ig) | 8,73 | 8,28 | 8,02 | 8,09 | 8,10 |

Die beobachtete Änderung des pH-Werts lag bei 6,1% (Disperal^{®} HP 10/7), 7,4% (Disperal^{®} HP 14/7) bzw. 7,2% (Disperal^{®} HP 18/7). Alle eingesetzten oberflächen-modifizierten Böhmit-Produkte weisen somit eine ausreichende Stabilität gegenüber Aminen auf.

### IV. Herstellung von Wasserbasislacken

### IV.1 Beispiele B1, B2 und B3 sowie Vergleichsbeispiel V1

Die in der nachfolgenden Tabelle IVa genannten Komponenten werden in der angegebenen Reihenfolge zusammengerührt und die resultierende Mischung wird für 30 Minuten gerührt. Die Viskosität wird jeweils durch Zugabe von deionisiertem Wasser auf einen Wert von 107 -111 mPa·s **(B1:** 110 mPa·s; **B2:** 107 mPa·s; **B3:** 111 mPa·s; **V1:** 108 mPa·s) bei einer Scherbelastung von 1291 s⁻¹, gemessen mit einem Rotations-Viskosimeter (Gerät Rheolab QC mit Temperiersystem C-LTD80/QC der Firma Anton Paar) bei 23 °C, eingestellt. Es werden zudem folgende pH-Werte ermittelt: pH 8,59 **(B1);** pH 8,50 **(B2);** 8,45 **(B3);** pH 8,53 **(V1).** Die Festkörpergehalte (bestimmt gemäß der vorstehend beschriebenen Methode) liegen bei 28,40 Gew.-% **(B1),** 28,20 Gew.-% **(B2),** 28,40 Gew.-% **(B3)** und 27,50 Gew.-% **(V1).**

Die eingesetzte wässrige Lösung enthaltend 3 Gew.-% eines Na-Mg-Schichtsilikats (Laponite^{®} RD) ist durch Zusammenmischen folgender Bestandteile in dieser Reihenfolge erhältlich: 3 Gewichtsteile Laponite^{®} RD, 0,009 Gewichtsteile 2-Methylisothiazolinon, 0,005 Gewichtsteile 1,2-Benzisothiazol-3(2H)-on, 3 Gewichtsteile Propylenglykol und 93,986 Gewichtsteil deionisiertes Wasser.

Als "Pigmentpaste P1" wurde eine Pigmentpaste eingesetzt, die durch Zusammenmischen folgender Bestandteile in dieser Reihenfolge erhältlich ist: 9 Gewichtsteile Ruß ("Emperor 200" der Firma Cabot). 2,5 Gewichtsteile Polypropylenglykol, 7 Gewichtsteile Butyldiglykol, 21,5 Gewichtsteile deionisiertes Wasser, 4,5 Gewichtsteile eines Polyesters, hergestellt gemäß Beispiel D, Spalte 16, Z. 37-59 der DE A 4009858, 53 Gewichtsteile eines Polyurethans und 2 Gewichtsteile einer wässrigen Dimethylethanolaminlösung (10 Gew.-% in Wasser).

Bei der eingesetzten "AMP-PTSA-Lösung" handelt es sich um eine Lösung, die durch Zusammenmischen folgender Bestandteile in dieser Reihenfolge erhältlich ist: 30,3 Gewichtsteile Isopropanol, 13,6 Gewichtsteile 1-Propanol, 10 Gewichtsteile deionisiertes Wasser, 30,3 Gewichtsteile 4-Methylbenzolsulfonsäure und 15,8 Gewichtsteile 2-Amino-2-methyl-1-propanol.

**Tabelle IVa: Beispiele B1 bis B3 sowie Vergleichsbeispiel V1**

| | Beispiel **B1** | Beispiel **B2** | Beispiel **B3** | Vergleichsbeispiel **V1** |
|---|---|---|---|---|
| Wässrige Lösung enthaltend 3 Gew.-% eines Na-Mq-Schichtsilikats (Laponite^{®} RD) | - | - | - | 15,65 |
| deionisiertes Wasser | - | - | - | 1,00 |
| 2,4,7,9-Tetramethyl-5-decindiol in Butylglykol (50 Gew.-%) | - | - | - | 0,75 |
| Acryliertes Polyurethan: hergestellt gemäß Beispiel D-C1 der WO 2015/007427 A1 | 36,00 | 36,00 | 36,00 | 36,00 |
| deionisiertes Wasser | 1,00 | 1,00 | 1,00 | 1,00 |
| Polyurethanmodifiziertes Polyacrylat; hergestellt gemäß S. 7, Z. 55 bis S.8, Z. 23 der DE 4437535 A1 | 3,00 | 3,00 | 3,00 | 3,00 |
| 2,4,7,9-Tetramethyl-5-decindiol in Butylglykol (50 Gew.-% | 1,50 | 1,50 | 1,50 | 0,92 |
| Dimethylethanolamin (10 Gew.-% in Wasser | 0,50 | 0,50 | 0,50 | 0,50 |
| Disperal^{®} HP 10/7 | 2,48 | - | - | - |
| Disperal^{®} HP 14/7 | - | 2,48 | - | - |
| Disperal^{®} HP 18/7 | - | - | 2,48 | - |
| deionisiertes Wasser | 14,03 | 14,03 | 14,03 | - |
| Dimethylethanolamin (10 Gew.-% in Wasser) | 1,07 | 1,49 | 1,74 | - |
| 2,4,7,9-Tetramethyl-5-decindiol in Butylglykol (50 Gew.-% | 0,17 | 0,17 | 0,17 | - |
| Isopropanol | 1,50 | 1,50 | 1,50 | 1,50 |
| Butylglykol | 1,50 | 1,50 | 1,50 | 1,50 |
| Propylenglykolmonobutylether | 1,50 | 1,50 | 1,50 | 1,50 |
| Butyldiglykol | 1,80 | 1,80 | 1,80 | 1,80 |
| Polyester; hergestellt gemäß S. 28, Z. 13 bis 33 (Beispiel BE1) der WO 2014/033135 A2 | 4,00 | 4,00 | 4,00 | 4,00 |
| Melaminformaldehydharz (Cymel^{®} 1133 der Firma Allnex) | 1,00 | 1,00 | 1,00 | 1,00 |
| Melaminformaldehydharz (Maprenal^{®} MF 909/93IB der Firma Ineos) | 4,00 | 4,00 | 4,00 | 4,00 |
| Dimethylethanolamin (10 Gew.-% in Wasser) | 0,50 | 0,50 | 0,50 | 0,50 |
| deionisiertes Wasser | 1,00 | 1,00 | 1,00 | - |
| 2-Ethylhexanol | 3,00 | 3,00 | 3,00 | 3,00 |
| n-Propanol | 0,70 | 0,70 | 0,70 | 0,70 |
| Isopar^{®} L (Gemisch aus C₁₁-C₁₃-Paraffinen) | 0,70 | 0,70 | 0,70 | 0,70 |
| Pluriol^{®} P900, erhältlich von der Firma BASF SE | 1,20 | 1,20 | 1,20 | 1,20 |
| AMP-PTSA-Lösung | 0,50 | 0,50 | 0,50 | 0,50 |
| deionisiertes Wasser | 1,00 | 1,00 | - | - |
| Pigmentpaste P1 | 15,00 | 15,00 | 15,00 | 15,00 |
| | Σ *98,65* | Σ *99,07* | Σ *98,32* | Σ *95,72* |

Die Zahlenangaben entsprechen jeweils Gewichtsteilen.

### IV.2 Beispiel B4 sowie Vergleichsbeispiele V2 und V3

Die in der Tabelle IVb aufgeführten Komponenten werden in der angegebenen Reihenfolge zusammengerührt und die resultierende Mischung für 30 Minuten gerührt. Die Viskosität wird jeweils durch Zugabe von deionisiertem Wasser auf einen Wert von 100 - 110 mPa·s bei einer Scherbelastung von 1291 s⁻¹, gemessen mit einem Rotations-Viskosimeter (Gerät Rheolab QC mit Temperiersystem C-LTD80/QC der Firma Anton Paar) bei 23 °C, eingestellt. Die pH-Werte der so erhaltenen Wasserbasislacke liegen bei pH 8,48 **(B4)** bzw. 8,70 **(V2).** Die Festkörpergehalte (bestimmt gemäß der vorstehend beschriebenen Methode) liegen bei 30,0 Gew.-% **(B4)** und 29,3 Gew.-% **(V2),**

Als Füllstoffpaste F1 wurde eine Bariumsulfat-haltige Paste eingesetzt, die durch fachgerechtes Vermahlen und anschließendes Homogenisieren folgender Bestandteile in dieser Reihenfolge erhältlich ist: 54,00 Gewichtsteile Bariumsulfat, Blanc Fixe Micro, erhältlich von der Firma Sachtleben Chemie, 0,3 Gewichtsteile Entschäumer Agitan 282, erhältlich von der Firma Münzing Chemie, 4,6 Gewichtsteile 2-Butoxyethanol, 5,7 Gewichtsteile deionisiertes Wasser 3 Gewwichtsteile eines Polyesters, gergestellt gemäß Beispiel D, Spalte 16, Z. 37-59 der DE A 4009858) und 32,4 Gewichtsteile eines Polyurethans.

Als Füllstoffpaste F2 wurde eine Talkum-haltige Paste eingesetzt, die durch fachgerechtes Vermahlen und anschließendes Homogenisieren folgender Bestandteile in dieser Reihenfolge erhältlich ist: 28 Gewichtsteile Talkum der Marke Micro Talc IT Extra, erhältlich von der Fa. Mono Minerals, 0,4 Gewichtsteile Entschäumer Agitan 282, erhältlich von der Firma Münzing Chemie, 1,4 Gewichtsteile Disperbyk^{®} 184, erhältlich von BYK Chemnie, Wesel, 0,6 Gewichtsteile des Acrylatverdickers Rheovis AS 130, erhältlich von BASF SE, 1 Gewichtsteil 2-Butoxyethanol, 3 Gewichtsteile Pluriol P 900, erhältlich von BASF SE, 18,4 Gewichtsteile deionisiertes Wasser, 47 Gewichtsteile eines Acrylat-Polymers (Bindemitteldispersion A aus der Anmeldung WO 91/15528 A1) und 0,2 Gewichtsteile einer wässrigen Dimethylethanolaminlösung (10 Gew.-% in Wasser).

**Tabelle IVb: Beispiel B4 und Vergleichsbeispiele V2 und V3**

| | Beispiel **B4** | Vergleichsbeispiel **V2** | Vergleichsbeispiel **V3** |
|---|---|---|---|
| Wässrige Lösung enthaltend 3 Gew.-% eines Na-Mg-Schichtsilikats (Laponite^{®} RD) | - | 11,70 | - |
| deionisiertes Wasser | - | 1,90 | - |
| 2,4,7,9-Tetramethyl-5-decindiol in Butylglykol (50 Gew.-%) | - | 0,60 | - |
| Acryliertes Polyurethan: hergestellt gemäß Beispiel D-C1 der WO 2015/007427 A1 | 28,70 | 28,70 | 28,70 |
| 2,4,7,9-Tetramethyl-5-decindiol in Butylglykol (50 Gew.-% ) | 0,65 | - | 0,65 |
| deionisiertes Wasser | 1,40 | 1,40 | 1,40 |
| Polyurethanmodifiziertes Polyacrylat; hergestellt gemäß S.7, Z. 55 bis S.8, Z. 23 der DE 4437535 A1 | 2,40 | 2,40 | 2,40 |
| 2,4,7,9-Tetramethyl-5-decindiol in Butylglykol (50 Gew.-%) | 0,60 | 0,60 | 0,60 |
| Dimethylethanolamin (10 Gew.-% in Wasser) | 0,40 | 0,40 | 0,40 |
| Disperal^{®} HP 14/7 | 2,00 | - | - |
| deionisiertes Wasser | 11,40 | - | 11,40 |
| Dimethylethanolamin (10 Gew.-% in Wasser) | 1,14 | - | 1,14 |
| 2,4,7,9-Tetramethyl-5-decindiol in Butylglykol (50 Gew.-%) | 0,13 | - | 0,13 |
| Isopropanol | 1,40 | 1,40 | 1,40 |
| Butylglykol | 1,00 | 1,00 | 1,00 |
| Propylenglykolmonobutylether | 1,20 | 1,20 | 1,20 |
| Butyldiglykol | 1,40 | 1,40 | 1,40 |
| Polyester; hergestellt gemäß S. 28, Z. 13 bis 33 (Beispiel BE1) der WO 2014/033135 A2 | 3,00 | 3,00 | 3,00 |
| Melaminformaldehydharz (Maprenal^{®} MF 909/93IB der Firma Ineos) | 4,00 | 4,00 | 4,00 |
| Dimethylethanolamin (10 Gew.-% in Wasser) | 0,40 | 0,40 | 0,40 |
| 2-Ethylhexanol | 2,40 | 2,40 | 2,40 |
| n-Propanol | 0,50 | 0,50 | 0,50 |
| Isopar^{®} L (Gemisch aus C₁₁-C₁₃-Paraffinen) | 0,50 | 0,50 | 0,50 |
| AMP-PTSA-Lösung | 0,40 | 0,40 | 0,40 |
| deionisiertes Wasser | 2,00 | 2,00 | 2,00 |
| Pigmentpaste P1 | 11,70 | 11,70 | 11,70 |
| Füllstoffpaste F1 | 3,30 | 3,30 | 3,30 |
| Füllstoffpaste F2 | 3,30 | 3,30 | 3,30 |
| Pluriol^{®} P900 | 1,00 | 1,00 | 1,00 |
| | Σ 86,32 | Σ 85,20 | Σ 84,32 |

Die Zahlenangaben entsprechen jeweils Gewichtsteilen.

### IV.3 Beispiel B5 sowie Vergleichsbeispiele V4 und V5

Die in der Tabelle IVc aufgeführten Komponenten werden in der angegebenen Reihenfolge zusammengerührt und die resultierende Mischung für 30 Minuten gerührt. Die Viskosität wird jeweils durch Zugabe von deionisiertem Wasser auf einen Wert von 110-120 mPa·s bei einer Scherbelastung von 1291 s⁻¹, gemessen mit einem Rotations-Viskosimeter (Gerät Rheolab QC mit Temperiersystem C-LTD80/QC der Firma Anton Paar) bei 23 °C, eingestellt. Die pH-Werte der so erhaltenen Wasserbasislacke liegen bei pH 8,17 **(B5)** bzw. 8,80 **(V4)** Die Festkörpergehalte (bestimmt gemäß der vorstehend beschriebenen Methode) liegen bei 30,4 Gew.-% **(B5)** und 29,0 Gew.-% **(V4),**

**Tabelle IVc: Beispiel B5 und Vergleichsbeispiele V4 und V5**

| | Beispiel **B5** | Vergleichsbeispiel **V4** | Vergleichsbeispiel **V5** |
|---|---|---|---|
| Wässrige Lösung enthaltend 3 Gew.-% eines Na-Mg-Schichtsilikats (Laponite^{®} RD) | - | 11,70 | - |
| deionisiertes Wasser | - | 2,10 | - |
| 2,4,7,9-Tetramethyl-5-decindiol in Butylglykol (50 Gew.-%) | - | 0,70 | - |
| Rezeptur H gemäß DE 19914055 A1 | 28,20 | 28,20 | 28,20 |
| Disperal^{®} HP 14/7 | 1,50 | - | - |
| deionisiertes Wasser | 8,50 | - | 8,50 |
| Dimethylethanolamin (10 Gew.-% in Wasser) | 0,85 | - | 0,85 |
| 2,4,7,9-Tetramethyl-5-decindiol in Butylglykol (50 Gew.-%) | 0,10 | - | 0,10 |
| Vernetzer | 4,90 | 4,90 | 4,90 |
| Isopropanol | 1,90 | 1,90 | 1,90 |
| Butylglykol | 2,80 | 2,80 | 2,80 |
| Polyester; hergestellt gemäß S. 28, Z. 13 bis 33 (Beispiel BE1) der WO 2014/033135 A2 | 3,50 | 3,50 | 3,50 |
| Dimethylethanolamin (10 Gew.-% in Wasser) | 2,20 | 2,20 | 2,20 |
| Deionisiertes Wasser | 1,00 | 1,00 | 1,00 |
| Polyurethanmodifiziertes Polyacrylat; hergestellt gemäß S. 7, Z. 55 bis S.8, Z. 23 der DE 4437535 A1 | 2,80 | 2,80 | 2,80 |
| 2,4,7,9-Tetramethyl-5-decindiol in Butylglykol (50 Gew.-%) | 1,50 | 1,50 | 1,50 |
| Deionisiertes Wasser | 0,80 | 0,80 | 0,80 |
| Rheovis^{®} AS 1130 | 2,50 | 2,50 | 2,50 |
| Deionisiertes Wasser | 0,80 | 0,80 | 0,80 |
| Texanol^{®} | 2,20 | 2,20 | 2,20 |
| Pluriol^{®} P900 | 1,00 | 1,00 | 1,00 |
| Hydroxyphenylalkylbenzotriazol | 0,70 | 0,70 | 0,70 |
| Bis(octyltetramethylpiperidyl)sebacat | 0,40 | 0,40 | 0,40 |
| Deionisiertes Wasser | 0,50 | 0,50 | 0,50 |
| Daotan^{®} TW 6464/36 WA | 1,90 | 1,90 | 1,90 |
| Deionisiertes Wasser | 0,60 | 0,60 | 0,60 |
| WBL Paste 4 | 15,80 | 15,80 | 15,80 |
| WBL Paste 5 | 1,40 | 1,40 | 1,40 |
| WBL Paste 6 | 1.20 | 1.20 | 1.20 |
| Deionisiertes Wasser | 1,10 | 1,10 | 1,10 |
| | Σ 90,65 | Σ 94,20 | Σ 89,15 |

Die Zahlenangaben entsprechen jeweils Gewichtsteilen.

Als WBL Paste 4 wurde eine DPP-Rotpaste eingesetzt, die durch fachgerechtes Vermahlen und anschließendes Homogenisieren folgender Bestandteile in dieser Reihenfolge erhältlich ist: 34,50 Gewichtsteile Irgazin Red L 3663 HD, erhältlich von BASF SE Ludwigshafen, 8,5 Gewichtsteilen Disperbyk 184, erhältlich von der Firma BYK - Chemie, Wesel, 2 Gewichtsteile 1-Propoxy-2-propanol, 2 Gewichtsteile Pluriol P 900, erhältlich von der Firma BASF SE, 18 Gewichtsteile deionisiertes Wasser und 35 Gewichtsteile eines Acrylat-Polymers (Bindemitteldispersion A aus der Anmeldung WO 91/15528 A1).

Als WBL Paste 5 wurde eine Rotpaste eingesetzt, die durch fachgerechtes Vermahlen und anschließendes Homogenisieren folgender Bestandteile in dieser Reihenfolge erhältlich ist: 30 Gewichtsteile Cinilex Red SR3C, erhältlich von der Firma Cinic, China, 6.0 Gewichtsteilen Disperbyk 184, erhältlich von der Firma BYK - Chemie, Wesel, 25,5 Gewichtsteile deionisiertes Wasser und 38,5 Gewichtsteile eines Acrylat-Polymers (Bindemitteldispersion A aus der Anmeldung WO 91/15528 A1).

Als WBL Paste 6 wurde eine Titandioxid - basierte Weißpaste eingesetzt, die durch fachgerechtes Vermahlen und anschließendes Homogenisieren folgender Bestandteile in dieser Reihenfolge erhältlich ist: 50 Gewichtsteile Titan Rutil R 960, erhältlich von der Firma Chemours, 3 Gewichtsteile Butylglykol, 1,5 Gewichtsteile Pluriol P 900, erhältlich von der Firma BASF SE, 11 Gewichtsteile eines Polyesters, 16 Gewichtsteile einer Polyurethandispersion, hergestellt gemäß WO 92/15405, Seite 15, Zeile 23-28, und 1,5 Gewichtsteile einer wäßrigen Dimethylethanolaminlösung (10 Gew.-% in Wasser).

Als Vernetzer kam ein blockiertes Isocyanat zum Einsatz, welches wie folgt hergestellt wurde: 230 Gewichtsteile des hydrophilen Isocyanates Bayhydur 304, erhältlich von der Firma Covestro, 40,76 Gewichtsteile Butylglykol wurden in einem Edelstahlreaktor, der mit Stickstoff beaufschlagt wurde, vorgelegt. Anschließend wurde der Reaktor verschlossen und 96,13 Gewichtsteile 3,5 Dimethylpyrazol (DMP) in Portionen so zugegeben dass eine Temperatur von 60°C nicht überschritten wurde. Nach Zugabe der kompletten Menge an DMP zusammen mit weiteren 40,76 Gewichtsteilen Butylglykol wurde auf 80°C aufgeheizt und die Temperatur für 2h bei 80°C gehalten, während gerührt und weiterhin mit Stickstoff überschleiert wurde. Nachdem die Bestimmung des NCO% - Gehaltes 0%, ergeben hatte, wurde das Reaktionsgemisch abgelassen. Der resultierende Vernetzer wies einen FK - Gehalt von 79,8 % (125°C, 1h) auf.

### V. Untersuchungen und Vergleich der Eigenschaften der wässrigen Basislacken bzw. der daraus erhaltenen Beschichtungen

### V.1 Vergleich zwischen B1, B2 und B3 (alle erfindungsgemäß) sowie V1 hinsichtlich Appearance, des Auftretens von Nadelstichen, Kochern und Läufern

Die Untersuchungen erfolgten dabei jeweils nach den vorstehend beschriebenen Bestimmungsmethoden. Die Tabellen Va und Vb fassen die Ergebnisse zusammen.

**Tabelle Va: Senkrechter Verlauf (18-23 µm)**

| | *SW* | *LW* | *DU* | *DOI* | *Kochergrenze [µm]* | *Nadelstichgrenze [µm]* |
|---|---|---|---|---|---|---|
| Beispiel **B1** | 14,3 | 5,7 | 1 | 96 | >30 | 29 |
| Beispiel **B2** | 14,5 | 5,3 | 1 | 95,5 | >30 | 31 |
| Beispiel **B3** | 13,6 | 5,1 | 1 | 95,7 | >30 | 30 |
| Vergleichsbeispiel **V1** | 8,4 | 7,3 | 1 | 97,5 | >30 | >30 |

Diese Untersuchungen zeigen, dass für **B1** bis **B3** deutlich bessere LW-Werte als für **V1** erhalten wurden.

### V.2 Vergleich zwischen B4 (erfindungsgemäß) sowie V2 hinsichtlich Appearance

Es wurde versucht, auch **V3** zwecks Vergleichs zu **B4** zu untersuchen, jedoch konnte **V3** gemäß der vorstehend beschriebenen Bestimmungsmethode nicht appliziert werden, da die Formulierung instabil gegen Ablaufen war und die erhaltenen Bleche daher nicht auswertbar waren.

Die Untersuchungen erfolgten dabei jeweils nach den vorstehend beschriebenen Bestimmungsmethoden. Die Tabellen Vb und Vc fassen die Ergebnisse zusammen.

**Tabelle Vb: Senkrechter Verlauf (18-23 µm)**

| | *SW* | *LW* | *DU* | *DOI* |
|---|---|---|---|---|
| Beispiel **B4** | 12,1 | 5,6 | 1 | 95,5 |
| Vergleichsbeispiel **V2** | 12,7 | 8,0 | 1 | 94,8 |

**Tabelle Vc: Waagerechter Verlauf (18-23 µm)**

| | *SW* | *LW* | *DU* | *DOI* |
|---|---|---|---|---|
| Beispiel **B4** | 11,0 | 2,8 | 1 | 95,9 |
| Vergleichsbeispiel **V2** | 12,5 | 4,4 | 1 | 94,9 |

Diese Untersuchungen zeigen insbesondere, dass für **B4** deutlich bessere LW-Werte als für **V2** erhalten wurden.

### V.3 Vergleich zwischen B5 (erfindungsgemäß) sowie V4 hinsichtlich Nadelstich- und Läufergrenze

Es wurde versucht, auch **V5** zwecks Vergleichs zu **B5** zu untersuchen, jedoch konnte **V5** gemäß der vorstehend beschriebenen Bestimmungsmethode nicht appliziert werden, da die Formulierung instabil gegen Ablaufen war und die erhaltenen Bleche daher nicht auswertbar waren. Die Untersuchungen erfolgten dabei jeweils nach den vorstehend beschriebenen Bestimmungsmethoden. Die Tabelle Vd fasst die Ergebnisse zusammen

**Tabelle Vd:**

| | *Nadelstichgrenze (waagerecht) [µm]* | *Nadelstichgrenze (senkrecht) [µm]* | *Beginn Auftreten von Läufern (senkrecht) [µm]* |
|---|---|---|---|
| Beispiel **B5** | 22 | 25 | 27 |
| Vergleichsbeispiel **V4** | 12 | 18 | 17 |

Diese Untersuchungen zeigen insbesondere, dass für **B5** eine deutlich bessere Nadelstichrobustheit im Vergleich zu **V4** beobachtet worden ist.

### VI. Verträglichkeitsexperimente (Stabilitätsexperimente)

Es werden Mischungen aus folgenden Bestandteilen hergestellt: 15 Gewichtsteile Disperal^{®} HP 14/7, 85 Gewichtsteile deionisiertes Wasser und 2,5 Gewichtsteile einer alkoholischen Lösung enthaltend 30 Gew.-% Diazabicyclononen und 70 Gew.-% n-Butanol. Die Mischung wurde für eine Dauer von 30 Minuten unter Erhalt einer Mischung **M1** gerührt.

Die Mischung **M1** wurde dann jeweils mit folgenden Materialien **P1** bis **P6** in einem Gewichtsverhältnis von 1:1 zusammengegeben, homogenisiert und die Stabilität der resultierenden Mischung nach 3 Tagen einer Lagerung bei 23°C visuell untersucht (Note 1: stabil, keine Stippen; Note 2: leichte Stippenbildung; Note 3: Stippenbildung):
**P1:** Rezeptur H gemäß DE 19914055 A1 (Festkörper: 27 Gew.-%)
**P2:** Dispersion PD 1 gemäß WO 2018/011311 A1 (Festkörper: 40,2 Gew.-%)
**P3:** Daotan^{®} TW 6464/36 WA (kommerziell erhältliches acryliertes Polyurethan der Firma Allnex; Festkörper: 36 Gew.-%)
**P4:** Beispiel D-C1 der WO 2015/007427 A1 (Festkörper: 32,8 Gew.-%)
**P5:** Dispersion einen Polyurethan-modifizierten Polyacrylats gemäß DE 4437535 A1, S. 7, Z. 55 bis S. 8, Z. 23 (Festkörper: 36 Gew.-%)
**P6:** Polyester, hergestellt gemäß Beispiel D, Spalte 16, Z. 37-59 der DE 40 09 858 A1 (Festkörper: 60 Gew.-%)

In allen Fällen konnte "Note 1" vergeben, d.h. es konnten keine Stabilitäts- und/oder Verträglichkeitsprobleme beobachtet werden.

### VII. Untersuchungen zum Thixotropierverhalten

Es werden Mischungen aus folgenden Bestandteilen hergestellt: 15 Gewichtsteile Disperal^{®} HP 10/7 oder Disperal^{®} HP 14/7 oder Disperal^{®} HP 18/7 und 85 Gewichtsteile deionisiertes Wasser. Mittels Dimethylethanolamin (10 Gew.-% in Wasser) wird ein pH-Wert von 8,0 bis 8,3 eingestellt. Die Mischungen wurden für eine Dauer von 30 Minuten unter Erhalt einer Mischung **M2** (mit Disperal^{®} HP 10/7), **M3** (mit Disperal^{®} HP 14/7) und **M4** (mit Disperal^{®} HP 18/7) gerührt.

Zu diesen Mischungen wurden dann verschiedene Materialien **K1** bis **K5** in verschiedenen Gewichtsverhältnissen zueinander zusammengegeben und homogenisiert. Dabei handelt es sich um:
**K1:** Daotan^{®} TW 6464/36 WA (kommerziell erhältliches acryliertes Polyurethan der Firma Allnex; Festkörper: 36 Gew.-%)
**K2:** Rezeptur H gemäß DE 19914055 A1 (Festkörper: 27 Gew.-%)
**K3:** Beispiel D-C1 der WO 2015/007427 A1 (Festkörper: 32,8 Gew.-%)
**K4:** Dispersion PD 1 gemäß WO 2018/011311 A1 (Festkörper: 40,2 Gew.-%)
**K5:** Beispiel wD BM2 gemäß Tabelle A der WO 2018/011311 A1 (Festkörper: 25,5 Gew.-%)

Tabelle Vlla fasst die Ergebnisse zusammen.

**Tabelle VIIa**

| *Material [Gew.-%]* | **M2** *[Gew.-%]* | ***M3** [Gew.-%]* | ***M4** [Gew.-%]* |
|---|---|---|---|
| **K1, 80%** | 20% | | |
| **K1, 60%** | 40% | | |
| **K2,** 60% | 40% | | |
| **K3,** 80% | 20% | | |
| **K3,** 60% | 40% | | |
| **K4,** 80% | 20% | | |
| **K4,** 60% | 40% | | |
| **K5,** 80% | 20% | | |
| **K5,** 60% | 40% | | |
| **K1, 80%** | | 20% | |
| **K1, 60%** | | 40% | |
| **K2,** 60% | | 40% | |
| **K3,** 80% | | 20% | |
| **K3,** 60% | | 40% | |
| **K4,** 80% | | 20% | |
| **K4,** 60% | | 40% | |
| **K5,** 80% | | 20% | |
| **K5,** 60% | | 40% | |
| **K1,** 80% | | | 20% |
| **K1, 60%** | | | 40% |
| **K2,** 60% | | | 40% |
| **K3,** 80% | | | 20% |
| **K3,** 60% | | | 40% |
| **K4,** 80% | | | 20% |
| **K4,** 60% | | | 40% |
| **K5,** 80% | | | 20% |
| **K5,** 60% | | | 40% |

In allen Fällen, in denen eine der Mischungen **M2** bis **M4** mit einem der Materialien **K1** bis **K5** in den angegebenen Gewichtsverhältnissen vermischt worden sind, konnten keinerlei Unverträglichkeiten beobachtet werden und die Mischungen zeigten allesamt ein strukturviskoses Verhalten.

## Patentansprüche

1. Eine wässrige Beschichtungsmittelzusammensetzung umfassend wenigstens
(A) wenigstens ein als Bindemittel einsetzbares Polymer als Komponente (A) und
(B) Aluminiumoxidhydroxid-Partikel als Komponente (B),
wobei die wässrige Beschichtungsmittelzusammensetzung einen pH-Wert ≥7,5 aufweist,
**dadurch gekennzeichnet, dass** die Beschichtungsmittelzusammensetzung die Komponente (B) in einer Menge von wenigstens 0,1 Gew.-% enthält, bezogen auf den Festkörpergehalt der Beschichtungsmittelzusammensetzung, und die Oberfläche der als Komponente (B) eingesetzten Aluminiumoxidhydroxid-Partikel zumindest teilweise mit wenigstens einer organischen Säure modifiziert ist.

2. Die Beschichtungsmittelzusammensetzung gemäß Anspruch 1, **dadurch gekennzeichnet, dass** das relative Gewichtsverhältnis von Komponente (B) zu Komponente (A) in der Beschichtungsmittelzusammensetzung in einem Bereich von 1:1,1 bis 1:20 liegt.

3. Die Beschichtungsmittelzusammensetzung gemäß Anspruch 1 oder 2, **dadurch gekennzeichnet, dass** die zumindest teilweise Modifizierung durch eine Behandlung der Aluminiumoxidhydroxid-Partikel mit wenigstens einer organischen Carbonsäure erfolgt.

4. Die Beschichtungsmittelzusammensetzung gemäß einem der vorstehenden Ansprüche, **dadurch gekennzeichnet, dass** die zur Modifizierung der Aluminiumoxidhydroxid-Partikel eingesetzte wenigstens eine organische Säure wenigstens zwei Carbonsäure-Gruppen aufweist.

5. Die Beschichtungsmittelzusammensetzung gemäß einem der vorstehenden Ansprüche, **dadurch gekennzeichnet, dass** die Oberfläche der als Komponente (B) eingesetzten Aluminiumoxidhydroxid-Partikel zumindest teilweise mit Zitronensäure als wenigstens eine organische Säure modifiziert ist.

6. Die Beschichtungsmittelzusammensetzung gemäß einem der vorstehenden Ansprüche, **dadurch gekennzeichnet, dass** die als Komponente (B) eingesetzten Aluminiumoxidhydroxid-Partikel in der wässrigen Beschichtungsmittelzusammensetzung als Partikel vorliegen, die eine mittlere Partikelgröße (d₅₀) von ≤750 nm aufweisen, wobei unter der mittleren Partikelgröße das arithmetische Zahlenmittel des mittleren Partikeldurchmessers verstanden wird, und die Bestimmung der mittleren Partikelgröße mittels Photonenkorrelationsspektroskopie (PCS) erfolgt.

7. Die Beschichtungsmittelzusammensetzung gemäß Anspruch 6, **dadurch gekennzeichnet, dass** die als Komponente (B) eingesetzten Aluminiumoxidhydroxid-Partikel in der wässrigen Beschichtungsmittelzusammensetzung als Partikel vorliegen, die eine mittlere Partikelgröße in einem Bereich von ≥75 nm bis ≤750 nm aufweisen.

8. Die Beschichtungsmittelzusammensetzung gemäß einem der vorstehenden Ansprüche, **dadurch gekennzeichnet, dass** sie die Komponente (B) in einer Menge von wenigstens 0,5 Gew.-% enthält, bezogen auf den Festkörpergehalt der Beschichtungsmittelzusammensetzung.

9. Die Beschichtungsmittelzusammensetzung gemäß einem der vorstehenden Ansprüche, **dadurch gekennzeichnet, dass** sie einen Festkörpergehalt von >25 Gew.-% aufweist, bezogen auf das Gesamtgewicht der Beschichtungsmittelzusammensetzung.

10. Die Beschichtungsmittelzusammensetzung gemäß einem der vorstehenden Ansprüche, **dadurch gekennzeichnet, dass** es sich um einen wässrigen Basislack handelt.

11. Die Beschichtungsmittelzusammensetzung gemäß einem der vorstehenden Ansprüche, **dadurch gekennzeichnet, dass** sie wenigstens ein Pigment und/oder wenigstens einen Füllstoff enthält.

12. Die Beschichtungsmittelzusammensetzung gemäß einem der vorstehenden Ansprüche, **dadurch gekennzeichnet, dass** das wenigstens eine als Komponente (A) eingesetzte Polymer ausgewählt ist aus der Gruppe bestehend aus Polyurethanen, Polyestern, Poly(meth)acrylaten und Mischpolymerisaten der genannten Polymere.

13. Ein Verfahren zur Herstellung einer Mehrschichtlackierung, bei dem
(1a) ein wässriger Basislack auf ein gegebenenfalls beschichtetes Substrat aufgebracht wird,
(2a) aus dem in Stufe (1a) aufgebrachten Lack ein Polymerfilm gebildet wird,
(1b) gegebenenfalls auf den so gebildeten Polymerfilm ein weiterer wässriger Basislack aufgebracht wird,
(2b) gegebenenfalls aus dem in Stufe (1b) aufgebrachten Lack ein Polymerfilm gebildet wird,
(3) auf die so erhaltene(n) Basislackschicht(en) ein Klarlack aufgebracht wird und anschließend
(4) die Basislackschicht(en) zusammen mit der Klarlackschicht gemeinsam gehärtet wird bzw. werden,
welches **dadurch gekennzeichnet ist, dass** die wässrige Beschichtungsmittelzusammensetzung gemäß einem der vorstehenden Ansprüche in Stufe (1a) als Basislack oder - sofern das Verfahren zudem die Stufen (1b) und (2b) umfasst - in Stufe (1a) und/oder (1b) als Basislack eingesetzt wird.

14. Das Verfahren gemäß Anspruch 13, **dadurch gekennzeichnet, dass** das Verfahren die Stufen (1b) und (2b) umfasst und das in Stufe (1a) eingesetzte Substrat ein metallisches Substrat ist, dessen in Stufe (1a) zu beschichtende Oberfläche wenigstens mit einer Elektrotauchlackschicht versehen ist.

15. Eine Mehrschichtlackierung, erhältlich nach dem Verfahren gemäß Anspruch 13 oder 14.

## Claims

1. An aqueous coating material composition comprising at least
(A) at least one polymer employable as binder, as component (A), and
(B) aluminum oxide hydroxide particles, as component (B),
where the aqueous coating material composition has a pH ≥7.5,
**characterized in that** the coating material composition comprises component (B) in an amount of at least 0.1 wt%, based on the solids content of the coating material composition, and the surface of the aluminum oxide hydroxide particles employed as component (B) is at least partly modified with at least one organic acid.

2. The coating material composition according to Claim 1, **characterized in that** the relative weight ratio of component (B) to component (A) in the coating material composition is in a range from 1:1.1 to 1:20.

3. The coating material composition according to Claim 1 or 2, **characterized in that** the at least partial modification is accomplished by treating the aluminum oxide hydroxide particles with at least one organic carboxylic acid.

4. The coating material composition according to any of the preceding claims, **characterized in that** the at least one organic acid used for modifying the aluminum oxide hydroxide particles has at least two carboxylic acid groups.

5. The coating material composition according to any of the preceding claims, **characterized in that** the surface of the aluminum oxide hydroxide particles employed as component (B) is modified at least partly with citric acid as at least one organic acid.

6. The coating material composition according to any of the preceding claims, **characterized in that** the aluminum oxide hydroxide particles employed as component (B) are present in the aqueous coating material composition in the form of particles which have an average particle size (d₅₀) of ≤750 nm, the average particle size referring to the arithmetic number average of the average particle diameter, and the average particle size being determined by means of photon correlation spectroscopy (PCS).

7. The coating material composition according to Claim 6, **characterized in that** the aluminum oxide hydroxide particles employed as component (B) are present in the aqueous coating material composition in the form of particles which have an average particle size in a range from ≥75 nm to ≤750 nm.

8. The coating material composition according to any of the preceding claims, **characterized in that** it comprises component (B) in an amount of at least 0.5 wt%, based on the solids content of the coating material composition.

9. The coating material composition according to any of the preceding claims, **characterized in that** it has a solids content of >25 wt%, based on the total weight of the coating material composition.

10. The coating material composition according to any of the preceding claims, **characterized in that** it is an aqueous basecoat material.

11. The coating material composition according to any of the preceding claims, **characterized in that** it comprises at least one pigment and/or at least one filler.

12. The coating material composition according to any of the preceding claims, **characterized in that** the at least one polymer employed as component (A) is selected from the group consisting of polyurethanes, polyesters, poly(meth)acrylates, and copolymers of the stated polymers.

13. A method for producing a multicoat paint system, in which
(1a) an aqueous basecoat material is applied to an optionally coated substrate,
(2a) a polymer film is formed from the coating material applied in stage (1a),
(1b) optionally a further aqueous basecoat material is applied to the polymer film thus formed,
(2b) optionally a polymer film is formed from the coating material applied in stage (1b),
(3) a clearcoat material is applied to the resulting basecoat film or films, and subsequently
(4) the basecoat film or films is or are jointly cured together with the clearcoat film,
which method is **characterized in that** the aqueous coating material composition according to any of the preceding claims is used as basecoat material in stage (1a) or - where the method further comprises stages (1b) and (2b) - as basecoat material in stage (1a) and/or (1b).

14. The method according to Claim 13, **characterized in that** the method comprises stages (1b) and (2b) and the substrate used in stage (1a) is a metallic substrate whose surface for coating in stage (1a) has been provided at least with an electrocoat film.

15. A multicoat paint system obtainable by the method according to Claim 13 or 14.

## Revendications

1. Composition aqueuse d'agent de revêtement, comprenant au moins
(A) au moins un polymère utilisable en tant que liant comme composant (A) et
(B) des particules d'oxyde-hydroxyde d'aluminium comme composant (B),
la composition aqueuse d'agent de revêtement présentant un pH ≥ 7,5, **caractérisée en ce que** la composition d'agent de revêtement contient le composant (B) en une quantité d'au moins 0,1% en poids, par rapport à la teneur en solides de la composition d'agent de revêtement, et la surface des particules d'oxyde-hydroxyde d'aluminium utilisées comme composant (B) est modifiée au moins partiellement par au moins un acide organique.

2. Composition d'agent de revêtement selon la revendication 1, **caractérisée en ce que** le rapport pondéral relatif du composant (B) au composant (A) dans la composition d'agent de revêtement se situe dans une plage de 1:1,1 à 1:20.

3. Composition d'agent de revêtement selon la revendication 1 ou 2, **caractérisée en ce que** la modification au moins partielle a lieu à l'aide d'un traitement des particules d'oxyde-hydroxyde aluminium par au moins un acide carboxylique organique.

4. Composition d'agent de revêtement selon l'une quelconque des revendications précédentes, **caractérisée en ce que** ledit au moins un acide organique utilisé pour la modification des particules d'oxyde-hydroxyde aluminium présente au moins deux groupes acide carboxylique.

5. Composition d'agent de revêtement selon l'une quelconque des revendications précédentes, **caractérisée en ce que** la surface des particules d'oxyde-hydroxyde aluminium utilisées comme composant (B) est modifiée au moins partiellement par de l'acide citrique en tant qu'au moins un acide organique.

6. Composition d'agent de revêtement selon l'une quelconque des revendications précédentes, **caractérisée en ce que** les particules d'oxyde-hydroxyde d'aluminium utilisées comme composant (B) dans la composition aqueuse d'agent de revêtement se trouvent sous forme de particules qui présentent une grosseur moyenne de particule (dso) ≤ 750 nm, la grosseur moyenne de particule étant la moyenne arithmétique en nombre du diamètre moyen de particule et la détermination de la grosseur moyenne de particule étant effectuée par spectroscopie par corrélation de photons (PCS).

7. Composition d'agent de revêtement selon la revendication 6, **caractérisée en ce que** les particules d'oxyde-hydroxyde d'aluminium utilisées comme composant (B) dans la composition aqueuse d'agent de revêtement se trouvent sous forme de particules qui présentent une grosseur moyenne de particule située dans une plage de ≥ 75 nm à ≤ 750 nm.

8. Composition d'agent de revêtement selon l'une quelconque des revendications précédentes, **caractérisée en ce qu'**elle contient le composant (B) en une quantité d'au moins 0,5% en poids, par rapport à la teneur en solides de la composition d'agent de revêtement.

9. Composition d'agent de revêtement selon l'une quelconque des revendications précédentes, **caractérisée en ce qu'**elle présente une teneur en solides > 25% en poids, par rapport au poids total de la composition d'agent de revêtement.

10. Composition d'agent de revêtement selon l'une quelconque des revendications précédentes, **caractérisée en ce qu'**il s'agit d'une laque aqueuse de base.

11. Composition d'agent de revêtement selon l'une quelconque des revendications précédentes, **caractérisée en ce qu'**elle contient au moins un pigment et/ou au moins une charge.

12. Composition d'agent de revêtement selon l'une quelconque des revendications précédentes, **caractérisée en ce que** ledit au moins un polymère utilisé comme composant (A) est choisi dans le groupe constitué par les polyuréthanes, les polyesters, les poly(méth)acrylates et les copolymères des polymères mentionnés.

13. Procédé pour la préparation d'un laquage multicouche, dans lequel
(1a) une laque aqueuse de base est appliquée sur un substrat le cas échéant revêtu,
(2a) un film polymère est formé à partir de la laque appliquée dans l'étape (la),
(1b) une autre laque aqueuse de base est le cas échéant appliquée sur le film polymère ainsi formé,
(2b) le cas échéant, un film polymère est formé à partir de la laque appliquée dans l'étape (1b),
(3) une laque claire est appliquée sur la/les couche(s) de laque de base ainsi obtenue(s) et ensuite
(4) la/les couche(s) de laque de base est/sont durcie(s) conjointement avec la couche de laque claire,
**caractérisé en ce que** la composition aqueuse d'agent de revêtement selon l'une quelconque des revendications précédentes est utilisée dans l'étape (la) comme laque de base ou - pour autant que le procédé comprenne en outre les étapes (1b) et (2b) - dans l'étape (la) et/ou (1b) comme laque de base.

14. Procédé selon la revendication 13, **caractérisé en ce que** le procédé comprend les étapes (1b) et (2b) et le substrat utilisé dans l'étape (la) est un substrat métallique dont la surface à revêtir dans l'étape (la) est pourvue d'au moins une couche de laque d'électro-immersion.

15. Laquage multicouche pouvant être obtenu par le procédé selon la revendication 13 ou 14.
